(19) Europäisches Patentamt
European Patent Office
Office européen des brevets

(11) EP 4 782 172 A2

(12) **EUROPEAN PATENT APPLICATION**

(43) Date of publication:
**29.07.2026 Bulletin 2026/31**

(21) Application number: **26183783.5**

(22) Date of filing: **22.02.2019**

(51) International Patent Classification (IPC):
***B29C 33/40*** *(2006.01)*

(52) Cooperative Patent Classification (CPC):
(C-Sets available)
**B29B 7/90; B29B 7/286; B29B 7/7495; B29B 7/823; B29B 7/826; B29C 33/40; C08K 3/04; C08K 5/14; C08L 27/12;** B29B 7/183; C08K 2201/006 (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.02.2018 JP 2018031230**

(62) Document number(s) of the earlier application(s) in accordance with Art. 76 EPC:
**19758117.6 / 3 757 164**

(71) Applicants:
- **Daikin Industries, Ltd.**
  **Osaka-shi, Osaka 530-0001 (JP)**
- **Bridgestone Corporation**
  **Tokyo 104-8340 (JP)**

(72) Inventors:
- **ARAI, Masashi**
  **Chuo-Ku, Tokyo 104-8340 (JP)**
- **OHTA, Daisuke**
  **Osaka-shi, Osaka 530-8323 (JP)**
- **UEDA, Akinori**
  **Osaka-shi, Osaka 530-8323 (JP)**
- **ODA, Yasuhiro**
  **Chuo-ku, Tokyo 104-8340 (JP)**
- **ORIDE, Junichi**
  **Chuo-ku, Tokyo 104-8340 (JP)**

(74) Representative: **Hoffmann Eitle**
**Patent- und Rechtsanwälte PartmbB**
**Arabellastraße 30**
**81925 München (DE)**

Remarks:
This application was filed on 09.06.2026 as a divisional application to the application mentioned under INID code 62.

(54) **CROSSLINKED FLUORINE RUBBER PRODUCT**

(57) Provided is a fluoroelastomer composition capable of improving resistance to crack growth at high temperature, and a crosslinked fluoroelastomer obtained by crosslinking the fluoroelastomer composition. The fluoroelastomer composition comprises 10 to 60 parts by mass of a carbon black (B) and 0.1 to 10 parts by mass of a peroxide cross-linking agent (C) per 100 parts by mass of a peroxide-crosslinkable fluoroelastomer (A). The carbon black (B) has a number of foreign particles measured under the following measurement conditions of 30/$mm^2$ or less.

Measurement conditions:
A dispersion is prepared by dispersing the carbon black (B) in ethanol such that a content of the carbon black (B) is 0.1% by mass, 1 ml of the dispersion is collected, the collected dispersion is vacuum-filtered with a filter, a residue of the carbon black (B) captured on a surface of the filter is observed with a scanning electron microscope, and the number of foreign particles having an aspect ratio of 1.1 or less and a Heywood diameter of 5 μm or more is measured.

EP 4 782 172 A2

(52) Cooperative Patent Classification (CPC): (Cont.)

C-Sets
**C08K 3/04, C08L 27/20;**
**C08K 5/14, C08L 27/20**

## Description

Technical Field

The present disclosure relates to a fluoroelastomer composition and a crosslinked fluoroelastomer.

Background Art

Fluoroelastomers have excellent heat resistance, oil resistance, chemical resistance, and the like, and are therefore industrially used in a wide range of fields, such as the automobile and machine industries. In recent years, there has been a need for fluoroelastomers having excellent mechanical properties at high temperature that can be used in fields where high mechanical properties are required at high temperature, such as bladders for tire manufacturing.

For example, Patent Literature 1 describes a fluoroelastomer composition including a rubber component containing a fluoroelastomer and carbon black, wherein the fluoroelastomer is at least one selected from a copolymer of vinylidene fluoride and at least one monomer selected from tetrafluoroethylene, hexafluoropropylene, pentafluoropropylene, trifluoroethylene, chlorotrifluoroethylene, vinyl fluoride, perfluoroalkyl vinyl ether, and propylene, a tetrafluoroethylene/perfluoroalkyl vinyl ether copolymer, and a tetrafluoroethylene/propylene copolymer, an average shear rate at the rotor tip of the kneader in kneading step (A) for blending the carbon black in the rubber component is 100 (1/sec) or more, a maximum kneading temperature $T_m$ is 120°C or more and 200°C or less, and in a dynamic viscoelasticity test (measurement temperature: 100°C, measurement frequency: 1 Hz) for unvulcanized rubber using a rubber process analyzer (RPA), a difference $\delta$GA' (G' (1%) - G' (100%)) between a shear modulus G' (1%) at 1% dynamic strain and a shear modulus G' (100%) at 100% dynamic strain is 120 kPa or more and 3000 kPa or less.

Patent Literature 2 describes a fluoroelastomer composition including a fluoroelastomer (A) and a carbon black (B), wherein the fluoroelastomer (A) is a vinylidene fluoride fluoroelastomer composed of a structural unit (VdF unit) derived from vinylidene fluoride and a structural unit derived from at least one selected from the group consisting of hexafluoropropylene (HFP), 2,3,3,3-tetrafluoropropylene, and perfluoro(alkyl vinyl ether) (PAVE), a molar ratio of the VdF unit and the structural unit derived from at least one selected from the group consisting of HFP, 2,3,3,3-tetrafluoropropylene, and PAVE in the fluoroelastomer (A) is 50/50 to 78/22, and in a dynamic viscoelasticity test (measurement frequency: 1 Hz, measurement temperature: 100°C) using a rubber process analyzer (RPA), a difference $\delta$G' (G' (1%) - G' (100%)) between a shear modulus G' (1%) at 1% dynamic strain and a shear modulus G' (100%) at 100% dynamic strain at the time of non-vulcanizing is 120 kPa or more and 3000 kPa or less.

Citation List

Patent Literature

Patent Literature 1: International Publication No. WO2012/026006
Patent Literature 2: International Publication No. WO2013/125735

Summary of Invention

Technical Problem

An object of the present disclosure is to provide a fluoroelastomer composition capable of providing a crosslinked fluoroelastomer that has excellent resistance to crack growth at high temperature, and a crosslinked fluoroelastomer obtained by crosslinking the fluoroelastomer composition.

Solution to Problem

A first aspect of the present disclosure provides a fluoroelastomer composition comprising 10 to 60 parts by mass of a carbon black (B) and 0.1 to 10 parts by mass of a peroxide cross-linking agent (C) per 100 parts by mass of a peroxide-crosslinkable fluoroelastomer (A), wherein

the carbon black (B) has a number of foreign particles measured under the following measurement conditions of 30/$mm^2$ or less.

Measurement conditions:

A dispersion is prepared by dispersing the carbon black (B) in ethanol such that a content of the carbon black (B) is 0.1% by mass, 1 ml of the dispersion is collected, the collected dispersion is vacuum-filtered with a filter, a residue of the carbon black (B) captured on a surface of the filter is observed with a scanning electron microscope, and the number of foreign particles having an aspect ratio of 1.1 or less and a Heywood diameter of 5 $\mu$m or more is measured.
The carbon black (B) preferably has a nitrogen adsorption specific surface area ($N_2SA$) of 25 $m^2/g$ or more and 180 $m^2/g$ or less, and a dibutyl phthalate (DBP) oil absorption of 40 ml/100 g or more and 250 ml/100 g or less.
The fluoroelastomer (A) is preferably a vinylidene fluoride fluoroelastomer, a tetrafluoroethylene/propylene fluoroelastomer, or a tetrafluoroethylene/perfluoroalkyl vinyl ether fluoroelastomer.
The fluoroelastomer composition preferably has, in a dynamic viscoelasticity test (measurement frequency: 1 Hz, measurement temperature: 100°C) using a rubber process analyzer (RPA), a difference $\delta$G' (G' (1%) - G' (100%)) between a shear modulus G' (1%) at 1% dynamic strain and a shear modulus G' (100%) at 100% dynamic strain at the time of non-crosslinking of 300 kPa or more and 5000 kPa or less.
A second aspect of the present disclosure provides a crosslinked fluoroelastomer obtained by crosslinking the above-described fluoroelastomer compositions.
A third aspect of the present disclosure provides a crosslinked fluoroelastomer obtained by peroxide-crosslinking a fluoroelastomer composition comprising a peroxide-crosslinkable fluoroelastomer (A), a carbon black (B), and a peroxide cross-linking agent (C), wherein

the crosslinked fluoroelastomer has a hardness at 25°C of 60 to 90, and
a number of foreign particles having an aspect ratio of 1.1 or less and a Heywood diameter of 5 $\mu$m or more present on a fracture surface obtained by tensile fracture of the crosslinked fluoroelastomer at 170°C is 25/$mm^2$ or less.

The above-described crosslinked fluoroelastomer can be used for a bladder for tire manufacturing.

Advantageous Effects of Invention

According to the present disclosure, by having the characteristics described above, it is possible to obtain a fluoroelastomer composition capable of providing a crosslinked fluoroelastomer that has excellent resistance to crack growth at high temperature, and a crosslinked fluoroelastomer obtained by crosslinking the fluoroelastomer composition.

Brief Description of Drawings

[Figure 1] Figure 1 is an exploded perspective view illustrating an example of a vacuum filtration device that can be used to carry out vacuum-filtration when the number of foreign particles in carbon black in the present invention is measured.
[Figure 2] Figure 2 is a diagram schematically illustrating an example of a kneading method in step (2-1) and step (2-2).

Description of Embodiments

Embodiments of the present disclosure will now be specifically described, but the present disclosure is not limited to the following embodiments.
The fluoroelastomer composition according to this embodiment includes a peroxide-crosslinkable fluoroelastomer (A), a carbon black (B), and a peroxide cross-linking agent (C).
The fluoroelastomer (A) preferably includes a structural unit derived from at least one monomer selected from the group consisting of tetrafluoroethylene (TFE), vinylidene fluoride (VdF), and a perfluoroethylenic unsaturated compound (hexafluoropropylene (HFP), perfluoro(alkyl vinyl ether) (PAVE), and the like) represented by formula (1):

$$CF_2=CF-R_f^a \qquad (1)$$

wherein $R_f^a$ is $-CF_3$ or $-OR_f^b$, with $R_f^b$ being a perfluoroalkyl group having 1 to 5 carbon atoms.
Examples of the fluoroelastomer (A) include vinylidene fluoride (VdF) fluoroelastomers, tetrafluoroethylene (TFE)/propylene (Pr) fluoroelastomers, tetrafluoroethylene (TFE)/perfluoroalkyl vinyl ether fluoroelastomers, tetrafluoroethylene (TFE)/propylene (Pr)/vinylidene fluoride (VdF) fluoroelastomers, ethylene (Et)/hexafluoropropylene (HFP) fluoroelastomers, ethylene (Et)/hexafluoropropylene (HFP)/vinylidene fluoride (VdF) fluoroelastomers, ethylene

(Et)/hexafluoropropylene (HFP)/tetrafluoroethylene (TFE) fluoroelastomers, fluorosilicone fluoroelastomers, and fluorophosphazene fluoroelastomers. These can be used singly, or in any combination that does not impair the effects of the present disclosure. Among these, VdF fluoroelastomers, TFE/Pr fluoroelastomers, and TFE/perfluoroalkyl vinyl ether fluoroelastomers are more preferable from the viewpoint of good heat aging resistance and oil resistance.

In the VdF fluoroelastomer, the content of the VdF repeating unit is, with respect to the total number of moles of the VdF repeating unit and a repeating unit derived from another comonomer, preferably 20 mol% or more, more preferably 40 mol% or more, further preferably 45 mol% or more, still further preferably 50 mol% or more, particularly preferably 55 mol% or more, and most preferably 60 mol% or more. Moreover, the content of the VdF repeating unit is, with respect to the total number of moles of the VdF repeating unit and a repeating unit derived from another comonomer, preferably 90 mol% or less, more preferably 85 mol% or less, further preferably 80 mol% or less, still further preferably 78 mol% or less, particularly preferably 75 mol% or less, and most preferably 70 mol% or less.

Further, the content of the repeating unit derived from another comonomer is, with respect to the total number of moles of the VdF repeating unit and a repeating unit derived from another comonomer, preferably 10 mol% or more, more preferably 15 mol% or more, further preferably 20 mol% or more, still further preferably 22 mol% or more, particularly preferably 25 mol% or more, and most preferably 30 mol% or more. Moreover, the content of the repeating unit derived from another comonomer is, with respect to the total number of moles of the VdF repeating unit and a repeating unit derived from another comonomer, preferably 80 mol% or less, more preferably 60 mol% or less, further preferably 55 mol% or less, still further preferably 50 mol% or less, particularly preferably 45 mol% or less, and most preferably 40 mol% or less.

The comonomer in the VdF fluoroelastomer is not limited as long as it is copolymerizable with VdF. Examples thereof include TFE, HFP, PAVE, chlorotrifluoroethylene (CTFE), trifluoroethylene, trifluoropropylene, tetrafluoropropylene, pentafluoropropylene, trifluorobutene, tetrafluoroisobutene, hexafluoroisobutene, vinyl fluoride, iodine-containing fluorinated vinyl ether, a fluorine-containing monomer such as a fluorine-containing monomer represented by formula (2)

$$CH_2{=}CFR_f^1 \qquad (2)$$

wherein $R_f^1$ is a linear or branched fluoroalkyl group having 1 to 12 carbon atoms, a fluorine-containing monomer such as a fluorine-containing monomer represented by formula (3)

$$CHF{=}CHR_f^2 \qquad (3)$$

wherein $R_f^2$ is a linear or branched fluoroalkyl group having 1 to 12 carbon atoms, a fluorine-free monomer such as ethylene (Et), propylene (Pr), and alkyl vinyl ether, a monomer that provides a crosslinkable group (cure site), and a reactive emulsifier. Among these monomers and compounds, one or a combination of two or more can be used.

The PAVE is more preferably a perfluoro(methyl vinyl ether) (PMVE) or a perfluoro(propyl vinyl ether) (PPVE), and PMVE is particularly preferable.

Further, the PAVE may be a perfluoro vinyl ether represented by formula (4)

$$CF_2{=}CFOCF_2OR_f^c \qquad (4)$$

wherein $R_f^c$ is a linear or branched perfluoroalkyl group having 1 to 6 carbon atoms, a cyclic perfluoroalkyl group having 5 to 6 carbon atoms, or a linear or branched perfluorooxyalkyl group having 2 to 6 carbon atoms including 1 to 3 oxygen atoms. For example, $CF_2{=}CFOCF_2OCF_3$, $CF_2{=}CFOCF_2OCF_2CF_3$, or $CF_2{=}CFOCF_2OCF_2CF_2OCF_3$ is preferably used.

The fluorine-containing monomer (2) represented by formula (2) is preferably a monomer in which $R_f^1$ is a linear fluoroalkyl group, and more preferably is a monomer in which $R_f^1$ is a linear perfluoroalkyl group. $R_f^1$ preferably has 1 to 6 carbon atoms. Examples of the fluorine-containing monomer (2) represented by formula (2) include $CH_2{=}CFCF_3$, $CH_2{=}CFCF_2CF_3$, $CH_2{=}CFCF_2CF_2CF_3$, and $CH_2{=}CFCF_2CF_2CF_2CF_3$, among which 2,3,3,3-tetrafluoropropylene represented by $CH_2{=}CFCF_3$ is preferable.

The fluorine-containing monomer (3) represented by formula (3) is preferably a monomer in which $R_f^2$ is a linear fluoroalkyl group, and more preferably is a monomer in which $R_f^2$ is a linear perfluoroalkyl group. $R_f^2$ preferably has 1 to 6 carbon atoms. Examples of the fluorine-containing monomer (3) represented by formula (3) include $CHF{=}CHCF_3$, $CHF{=}CHCF_2CF_3$, $CHF{=}CHCF_2CF_2CF_3$, and $CHF{=}CHCF_2CF_2CF_2CF_3$, among which 1,3,3,3-tetrafluoropropylene represented by $CHF{=}CHCF_3$ is preferable.

"TFE/propylene (Pr) fluoroelastomer" refers to a fluorine-containing copolymer composed of 45 to 70 mol% of TFE and 55 to 30 mol% of propylene (Pr). In addition to these two components, the TFE/propylene (Pr) fluoroelastomer may also include 0 to 40 mol% of a specific third component (for example, PAVE).

"TFE/PAVE copolymer" refers to a fluorine-containing copolymer composed of 50 to 90 mol% of TFE and 50 to 10 mol% of PAVE. The compositional nature of TFE/PAVE is preferably (50 to 90)/(50 to 10) (mol%), more preferably (50 to 80)/(50 to 20) (mol%), and further preferably (55 to 75)/ (45 to 25) (mol%). In addition to these two components, the

TFE/PAVE copolymer may also include 0 to 40 mol% of a specific third component, for example, a fluorine-free monomer such as ethylene (Et), propylene (Pr), and alkyl vinyl ether, and a monomer that provides a crosslinkable group (cure site).

The ethylene (Et)/HFP copolymer has an Et/HFP compositional nature of preferably (35 to 80)/(65 to 20) (mol%), and more preferably (40 to 75)/(60 to 25) (mol%).

The Et/HFP/TFE copolymer has an Et/HFP/TFE compositional nature of preferably (35 to 75)/(25 to 50)/(0 to 15) (mol%), and more preferably (45 to 75)/(25 to 45)/(0 to 10) (mol%).

To enable even better resistance to crack growth at high temperature to be realized, the fluoroelastomer (A) is preferably at least one binary copolymer selected from the group consisting of a VdF/HFP copolymer, a copolymer of the VdF/fluorine-containing monomer (2) represented by formula (2), and a VdF/PAVE copolymer.

Further, the fluoroelastomer (A) is more preferably at least one binary copolymer selected from the group consisting of a VdF/HFP copolymer, a VdF/2,3,3,3-tetrafluoropropylene copolymer, a VdF/1,3,3,3-tetrafluoropropylene copolymer, and a VdF/PAVE copolymer, further preferably at least one binary copolymer selected from the group consisting of a VdF/HFP copolymer, a VdF/2,3,3,3-tetrafluoropropylene copolymer, and a VdF/1,3,3,3-tetrafluoropropylene copolymer, and particularly preferably at least one binary copolymer selected from the group consisting of a VdF/HFP copolymer and a VdF/2,3,3,3-tetrafluoropropylene copolymer.

The fluoroelastomer (A) preferably has a number average molecular weight Mn of 5000 to 500000, more preferably 10000 to 500000, and further preferably 20000 to 500000.

Further, for example, when it is desired to lower the viscosity of the fluoroelastomer composition, another fluoroelastomer may be additionally blended with the fluoroelastomer (A). This other fluoroelastomer may be a low molecular weight liquid fluoroelastomer (number average molecular weight of 1000 or more), a low molecular weight fluoroelastomer having a number average molecular weight of about 10000, a fluoroelastomer having a number average molecular weight of about 100000 to 200000, and the like. One such other fluoroelastomer may be added, or two or more fluoroelastomers having a different compositional nature may be added.

From the viewpoint of workability, the fluoroelastomer (A) preferably has a Mooney viscosity at 100°C in the range of 20 to 200, and more preferably in the range of 30 to 180. The Mooney viscosity is measured according to JIS K6300.

The above-described examples of the fluoroelastomer (A) are the structure of the main monomer. The fluoroelastomer (A) according to this embodiment may be a copolymer of those above-described main monomers and a monomer that provides a crosslinkable group that is capable of crosslinking with a peroxide. The monomer that provides a crosslinkable group capable of crosslinking with a peroxide may be any monomer that can appropriately introduce the crosslinkable group capable of crosslinking with a peroxide according to the production method or the like. Examples include known polymerizable compounds including an iodine atom, and chain transfer agents.

Preferable examples of the monomer that provides a crosslinkable group capable of crosslinking with a peroxide include compounds represented by formula (5):

$$CY^1_2=CY^2R_f^3\text{-}X^1 \qquad (5)$$

wherein $Y^1$ and $Y^2$ are each a fluorine atom, a hydrogen atom, or $-CH_3$; $R_f^3$ is a linear or branched fluorine-containing alkylene group which optionally contains one or more ether bonds and optionally contains an aromatic ring, and in which part or all of the hydrogen atoms is/are replaced by a fluorine atom(s); and $X^1$ is an iodine atom. Specific examples thereof include iodine-containing monomers represented by formula (6):

$$CY^1_2=CY^2R_f^4CHR^1\text{-}X^1 \qquad (6)$$

wherein $Y^1$, $Y^2$, and $X^1$ are defined in the same manner as described above; $R_f^4$ is a linear or branched fluorine-containing alkylene group which optionally contains one or more ether bonds and in which part or all of the hydrogen atoms is/are replaced by a fluorine atom(s), that is, a linear or branched fluorine-containing alkylene group in which part or all of the hydrogen atoms is/are replaced by a fluorine atom(s), a linear or branched fluorine-containing oxyalkylene group in which part or all of the hydrogen atoms is/are replaced by a fluorine atom(s), or a linear or branched fluorine-containing polyoxyalkylene group in which part or all of the hydrogen atoms is/are replaced by a fluorine atom(s); and $R^1$ is a hydrogen atom or a methyl group,
and iodine-containing monomers represented by any of formulas (7) to (24):

$$CY^4_2=CY^4(CF_2)_n\text{-}X^1 \qquad (7)$$

wherein $Y^4$ are the same as or different from each other, and are each a hydrogen atom or a fluorine atom; and n is an integer of 1 to 8,

$$CF_2=CFCF_2R_f^5\text{-}X^1 \qquad (8)$$

wherein

[Formula 1]

$$Rf^5 \text{ is } -\!\!(OCF_2)_n- , \; -\!\!(OCF(CF_3))_n-$$

and n is an integer of 0 to 5,

$CF_2=CFCF_2(OCF(CF_3)CF_2)_m(OCH_2CF_2CF_2)_nOCH_2CF_2-X^1$ (9)

wherein m is an integer of 0 to 5; and n is an integer of 0 to 5,

$CF_2=CFCF_2(OCH_2CF_2CF_2)_m(OCF(CF_3)CF_2)_nOCF(CF_3)-X^1$ (10)

wherein m is an integer of 0 to 5; and n is an integer of 0 to 5,

$CF_2=CF(OCF_2CF(CF_3))_mO(CF_2)_n-X^1$ (11)

wherein m is an integer of 0 to 5; and n is an integer of 1 to 8,

$CF_2=CF(OCF_2CF(CF_3))_m-X^1$ (12)

wherein m is an integer of 1 to 5,

$CF_2=CFOCF_2(CF(CF_3)OCF_2)_nCF(-X^1)CF_3$ (13)

wherein n is an integer of 1 to 4,

$CF_2=CFO(CF_2)_nOCF(CF_3)-X^1$ (14)

wherein n is an integer of 2 to 5,

$CF_2=CFO(CF_2)_n-(C_6H_4)-X^1$ (15)

wherein n is an integer of 1 to 6,

$CF_2=CF(OCF_2CF(CF_3))_nOCF_2CF(CF_3)-X^1$ (16)

wherein n is an integer of 1 to 2,

$CH_2=CFCF_2O(CF(CF_3)CF_2O)_nCF(CF_3)-X^1$ (17)

wherein n is an integer of 0 to 5,

$CF_2=CFO(CF_2CF(CF_3)O)_m(CF_2)_n-X^1$ (18)

wherein m is an integer of 0 to 5; and n is an integer of 1 to 3,

$CH_2=CFCF_2OCF(CF_3)OCF(CF_3)-X^1$ (19)

$CH_2=CFCF_2OCH_2CF_2-X^1$ (20)

$CF_2=CFO(CF_2CF(CF_3)O)_mCF_2CF(CF_3)-X^1$ (21)

wherein m is an integer of 0 or higher,

$$CF_2=CFOCF(CF_3)CF_2O(CF_2)_n\text{-}X^1 \qquad (22)$$

wherein n is an integer of 1 or higher,

$$CF_2=CFOCF_2OCF_2CF(CF_3)OCF_2\text{-}X^1 \qquad (23),$$

and

$$CH_2=CH\text{-}(CF_2)_nX^1 \qquad (24)$$

wherein n is an integer of 2 to 8.

In formulas (7) to (24), $X^1$ is defined in the same manner as described above. These monomers may be used singly or in any combination.

A preferable example of the iodine-containing monomer represented by formula (6) is an iodine-containing fluorinated vinyl ether represented by formula (25) :

[Formula 2]

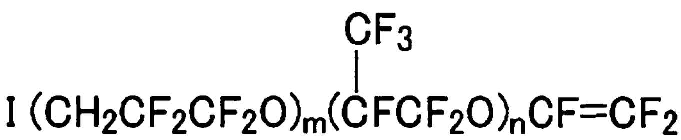

(25)

wherein m is an integer of 1 to 5; and n is an integer of 0 to 3. More specific examples thereof include

[Formula 3]

$ICH_2CF_2CF_2OCF=CF_2$、$I(CH_2CF_2CF_2O)_2CF=CF_2$、

$I(CH_2CF_2CF_2O)_3CF=CF_2$、

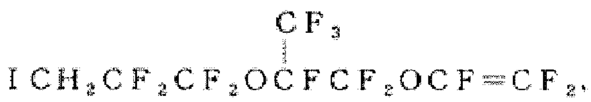

、

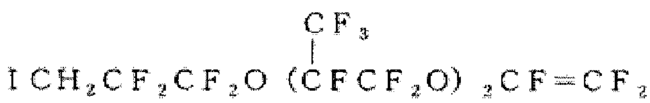

Among these, $ICH_2CF_2CF_2OCF=CF_2$ is preferable.

More specifically, preferable examples of the iodine-containing monomer represented by formula (7) include $ICF_2CF_2CF=CH_2$ and $I(CF_2CF_2)_2CF=CH_2$.

More specifically, a preferable example of the iodine-containing monomer represented by formula (11) is $I(CF_2CF_2)_2OCF=CF_2$.

More specifically, preferable examples of the iodine-containing monomer represented by formula (24) include $CH_2=CHCF_2CF_2I$ and $I(CF_2CF_2)_2CH=CH_2$.

The fluoroelastomer (A) can also be obtained by a polymerization method carried out using a bromine compound or an iodine compound as the chain transfer agent. For example, an example of such a method is a method in which emulsion polymerization is carried out in an aqueous medium while pressure is applied in the presence of a bromine compound or an iodine compound in a substantially oxygen-free state (iodine transfer polymerization method). Typical examples of the bromine compound or iodine compound used include compounds represented by the formula:

$$R^2I_xBr_y$$

wherein x and y are each an integer of 0 to 2 and satisfy $1 \leq x + y \leq 2$; and $R^2$ is a saturated or unsaturated fluorohydrocarbon group or chlorofluorocarbon group having 1 to 16 carbon atoms, or is a hydrocarbon group having 1 to 3 carbon atoms that optionally includes an oxygen atom. By using a bromine compound or an iodine compound, the iodine or bromine is introduced into the polymer and functions as a crosslinking point.

Examples of the bromine compound or iodine compound include 1,3-diiodoperfluoropropane, 2-iodoperfluoropropane, 1,3-diiodo-2-chloroperfluoropropane, 1,4-diiodoperfluorobutane, 1,5-diiodo-2,4-dichloroperfluoropentane, 1,6-diiodoperfluorohexane, 1,8-diiodoperfluorooctane, 1,12-diiodoperfluorododecane, 1,16-diiodoperfluorohexadecane, diiodomethane, 1,2-diiodoethane, 1,3-diiodo-n-propane, $CF_2Br_2$, $BrCF_2CF_2Br$, $CF_3CFBrCF_2Br$, $CFClBr_2$, $BrCF_2CFClBr$, $CFBrClCFClBr$, $BrCF_2CF_2CF_2Br$, $BrCF_2CFBrOCF_3$, 1-bromo-2-iodoperfluoroethane, 1-bromo-3-iodoperfluoropropane, 1-bromo-4-iodoperfluorobutane, 2-bromo-3-iodoperfluorobutane, 3-bromo-4-iodoperfluorobutene-1,2-bromo-4-iodoperfluorobutene-1, and monoiodomonobromo-substituted products, diiodomonobromo-substituted products, and (2-iodoethyl)- and (2-bromoethyl)-substituted products of benzene. These compounds may be used singly or may be used in combination with each other. Among these, from the viewpoint of polymerization reactivity, crosslinking reactivity, and availability, it is preferable to use 1,4-diiodoperfluorobutane, 1,6-diiodoperfluorohexane, and 2-iodoperfluoropropane.

From the viewpoint of crosslinkability, the fluoroelastomer (A) is preferably a fluoroelastomer including an iodine atom and/or a bromine atom as a crosslinking point. The content of the iodine atom and/or bromine atom is preferably 0.001 to 10% by mass, more preferably 0.01 to 5% by mass, and particularly preferably 0.01 to 3% by mass.

The fluoroelastomer composition according to this embodiment includes 10 to 60 parts by mass of the carbon black (B) per 100 parts by mass of the peroxide-crosslinkable fluoroelastomer (A). If the amount of the carbon black (B) to be blended is too large, the mechanical properties of the crosslinked fluoroelastomer tend to deteriorate. Also, if the amount is too small, the mechanical properties of the crosslinked fluoroelastomer tend to deteriorate. Further, from the viewpoint of a good balance among the physical properties, with respect to 100 parts by mass of the fluoroelastomer (A), 15 parts by mass or more is more preferable, and 20 parts by mass or more is further preferable. From the viewpoint of a good balance among the physical properties, the amount is more preferably 55 parts by mass or less, further preferably 50 parts by mass or less, still further preferably 45 parts by mass or less, and particularly preferably 40 parts by mass or less.

Examples of the carbon black (B) include, as defined in terms of production method, furnace black, acetylene black, thermal black, channel black, and graphite. Further examples include, as defined in terms of use, any carbon black commercially available as rubber carbon black, color carbon black, and conductive carbon black. Specific examples of the rubber carbon black include SAF-HS (nitrogen adsorption specific surface area ($N_2SA$): 142 $m^2/g$, dibutyl phthalate (DBP) oil absorption: 130 ml/100 g), SAF ($N_2SA$: 142 $m^2/g$, DBP: 115 ml/100 g), N234 ($N_2SA$: 126 $m^2/g$, DBP: 125 ml/100 g), ISAF ($N_2SA$: 119 $m^2/g$, DBP: 114 ml/100 g), ISAF-LS ($N_2SA$: 106 $m^2/g$, DBP: 75 ml/100 g), ISAF-HS ($N_2SA$: 99 $m^2/g$, DBP: 129 ml/100 g), N339 ($N_2SA$: 93 $m^2/g$, DBP: 119 ml/100 g), HAF-LS ($N_2SA$: 84 $m^2/g$, DBP: 75 ml/100 g), HAF-HS ($N_2SA$: 82 $m^2/g$, DBP: 126 ml/100 g), HAF ($N_2SA$: 79 $m^2/g$, DBP: 101 ml/100 g), N351 ($N_2SA$: 74 $m^2/g$, DBP: 127 ml/100 g), LI-HAF ($N_2SA$: 74 $m^2/g$, DBP: 101 ml/100 g), MAF-HS ($N_2SA$: 56 $m^2/g$, DBP: 158 ml/100 g), MAF ($N_2SA$: 49 $m^2/g$, DBP: 133 ml/100 g), FEF-HS ($N_2SA$: 42 $m^2/g$, DBP: 160 ml/100 g), FEF ($N_2SA$: 42 $m^2/g$, DBP: 115 ml/100 g), SRF-HS ($N_2SA$: 32 $m^2/g$, DBP: 140 ml/100 g), SRF-HS ($N_2SA$: 29 $m^2/g$, DBP: 152 ml/100 g), GPF ($N_2SA$: 27 $m^2/g$, DBP: 87 ml/100 g), and SRF ($N_2SA$: 27 $m^2/g$, DBP: 68 ml/100 g). Specific examples of the color carbon black include HCC, MCC, RCC, LCC, HCF, MCF, RCF, LCF, LFF, and various acetylene blacks according to classification in the Carbon Black Handbook, 3rd edition (published in 1995). Preferable among these are SAF-HS, SAF, N234, ISAF, ISAF-LS, ISAF-HS, N339, HAF-LS, HAF-HS, HAF, N351, LI-HAF, MAF-HS, and acetylene blacks. These carbon blacks may be used singly or in combinations of two or more.

In fields where high mechanical properties are required at high temperature, such as bladders for tire manufacturing, it is necessary to suppress fatigue fracture during use at high temperature.

The present inventors discovered that when a fluoroelastomer is used for dynamic applications, under high temperature conditions of 100°C or more, once a defect occurs inside the fluoroelastomer, a crack rapidly develops, leading to fracturing. This phenomenon is considered to be unique to fluoroelastomers. From this, by suppressing the occurrence of the fracture starting point inside the fluoroelastomer, in particular, by suppressing the occurrence of fine fracture starting point that would not be an issue for general-purpose rubbers other than fluoroelastomers, it was found that the resistance of the fluoroelastomer to crack growth during high temperature use could be improved. As a result of intensive studies based on this new discovery, the present inventors found that the initial crack is caused by specific foreign matter included in carbon black, which peels from the fluoroelastomer interface at high temperature, causing resistance to crack growth to deteriorate. The present inventors carried out further studies based on this finding, and discovered that resistance to crack growth at high temperature can be improved by using, as the carbon black included in the fluoroelastomer composition, a carbon black having a small content of foreign matter (lumps of carbon, carbon grit) of specific dimensions. The carbon black (B) used in the fluoroelastomer composition according to this embodiment has a small number, namely, 30/$mm^2$ or less, of foreign particles measured under the specific measurement conditions described later. By using the carbon black (B) having a small number of foreign particles in this way, it is possible to

suppress the occurrence of initial cracks that become fracture starting points inside the fluoroelastomer, and as a result, it is possible to suppress the growth of cracks that originate from an initial crack during high temperature use.

The carbon black (B) used in the fluoroelastomer composition has a number of foreign particles measured under the following measurement conditions of 30/$mm^2$ or less. First, a dispersion is provided by dispersing the carbon black (B) in ethanol such that the content of the carbon black (B) is 0.1% by mass. This carbon black (B)/ethanol dispersion can be prepared by adding a predetermined amount of carbon black (B) to ethanol and applying ultrasonic waves for about 2 hours with an ultrasonic wave machine having an oscillation frequency of 35000 Hz. 1 ml of this dispersion is collected, and the collected dispersion is vacuum-filtered with a filter. Then, the residue of the carbon black (B) captured on the surface of the filter is observed with a scanning electron microscope (SEM), and nine arbitrary locations on the filtration surface are photographed at an observation magnification of 500. The number of foreign particles having an aspect ratio of 1.1 or less and a Heywood diameter of 5 μm or more in each image is measured. The SEM observation is preferably carried out by observing the surface of a vacuum-filtered filter on which Pt has been deposited. In the present specification, the term "aspect ratio" means the ratio (major diameter)/(minor diameter) of the longest diameter (major diameter) to the shortest diameter (minor diameter) of the particles (foreign matter) observed in the SEM image. The present inventors discovered that resistance to crack growth at high temperature can be improved by using carbon black (B) in which the number of foreign particles (foreign matter content) having a relatively large Heywood diameter of 5 μm or more and an aspect ratio of 1.1 or less, which are close to a spherical shape, is 30/$mm^2$ or less. In the carbon black (B), the number of foreign particles measured under the above-described measurement conditions is preferably 0/$mm^2$ or more and 20/$mm^2$ or less, and more preferably 0/$mm^2$ or more and 15/$mm^2$ or less. When the number of foreign particles is within the above range, resistance to crack growth at high temperature can be improved even further.

The vacuum filtration can be performed using a vacuum filtration device having a circular filtration surface with a diameter of 35 mm. Although not limiting the present invention, the vacuum filtration may be carried out, for example, using the vacuum filtration device illustrated in Figure 1. Figure 1 is an exploded perspective view of a vacuum filtration device 9. As illustrated in the figure, the vacuum filtration device 9 may be configured to include a funnel 1, a filter (a membrane filter described later) 2, a support screen 3, a filter base 4, and a filtrate collection container (or a flask) 5. When these are assembled, the vacuum filtration device 9 may be configured by attaching the filter base 4 to an upper portion of the filtrate collection container 5, sandwiching the support screen 3 and the filter 2 between the funnel 1 and the filter base 4, and using a clamp to fix the funnel 1 and the filter base 4. In the vacuum filtration device 9, the term "filtration surface" refers to an opening surface on the discharge side (downstream side) of the funnel 1, and it has a circular shape with a diameter of 35 mm. Using this vacuum filtration device 9, the dispersion collected as described above is, while the pressure is reduced from the body of the filter base 4 as indicated by the arrow in Figure 1, fed into the funnel 1 and vacuum-filtered with the filter 2 on the support screen 3. A carbon black residue is captured on the surface of the filter 2, and the filtrate that has passed through the filter 2 is collected in the filtrate collection container 5.

A membrane filter can be used as the filter. More specifically, a membrane filter is used that has a pore size of 0.1 μm or more and 3 μm or less (e.g., about 0.8 μm), a mass of 0.5 mg/$cm^2$ or more and 10 mg/$cm^2$ or less (e.g., about 0.9 mg/$cm^2$), a thickness of 1 μm or more and 200 μm or less (e.g., about 9 μm), and an area equal to or larger than the filtration surface (which is a circle having a diameter of 35 mm) (usually a substantially circular shape, that may be, but is not limited to, for example, a circle having a diameter of 47 mm), and that is formed of a material that has chemical resistance to ethanol (e.g., polycarbonate, cellulose acetate, polytetrafluoroethylene (PTFE), and polyvinylidene fluoride (PVDF)). For example, although a polycarbonate membrane filter having a plurality of cylindrical holes (pores) having substantially the same diameter may be used, the membrane filter is not limited to this example. A polycarbonate membrane filter having a pore density of $1 \times 10^5$ pores/$cm^2$ or more and $4 \times 10^8$ pores/$cm^2$ or less (e.g., about $3 \times 10$ pores/$cm^2$) can be used. The vacuum filtration is preferably carried out so that a pressure (suction force) is uniformly applied to the filter across the filtration surface.

The carbon black (B) preferably has a nitrogen adsorption specific surface area ($N_2SA$) of 25 $m^2$/g or more and 180 $m^2$/g or less, and a dibutyl phthalate (DBP) oil absorption of 40 ml/100 g or more and 250 ml/100 g or less.

If the nitrogen adsorption specific surface area ($N_2SA$) is too small, the mechanical properties of the crosslinked fluoroelastomer tend to deteriorate. From this viewpoint, the nitrogen adsorption specific surface area ($N_2SA$) is 25 $m^2$/g or more, preferably 50 $m^2$/g or more, more preferably 70 $m^2$/g or more, further preferably 75 $m^2$/g or more, and particularly preferably 80 $m^2$/g or more. On the other hand, from the viewpoint of being generally available, the nitrogen adsorption specific surface area ($N_2SA$) is preferably 180 $m^2$/g or less. The nitrogen adsorption specific surface area is measured according to JIS K6217-2.

If the dibutyl phthalate (DBP) oil absorption is too low, the mechanical properties of the crosslinked fluoroelastomer tend to deteriorate. From this viewpoint, the DBP oil absorption is 40 ml/100 g or more, preferably 50 ml/100 g or more, more preferably 60 ml/100 g or more, and particularly preferably 70 ml/100 g or more. On the other hand, from the viewpoint of being generally available, the DBP oil absorption is 250 ml/100 g or less, preferably 240 ml/100 g or less, more preferably 230 ml/100 g or less, and further preferably 220 ml/100 g or less, and may even be, for example 180 ml/100 g. The DBP oil absorption is measured according to JIS K6217-4.

The carbon black (B) preferably has an arithmetic average particle size of the primary particles of 1 nm or more and 200 nm or less. Further, from the viewpoint of being generally available, the arithmetic average particle size is preferably 5 nm or more, more preferably 10 nm or more, and further preferably 15 nm or more. If the arithmetic average particle size of the primary particles is too large, the mechanical properties of the crosslinked fluoroelastomer tend to deteriorate. From this viewpoint, 100 nm or less is more preferable, 60 nm or less is further preferable, 50 nm or less is still further preferable, and 40 nm or less is particularly preferable.

The amount of the peroxide cross-linking agent to be blended is, with respect to 100 parts by mass of the fluoroelastomer (A), preferably 0.1 to 10 parts by mass, more preferably 0.1 to 9 parts by mass, and particularly preferably 0.2 to 8 parts by mass. If the amount of the peroxide cross-linking agent is less than 0.01 parts by mass, the crosslinking of the fluoroelastomer (A) tends to not proceed sufficiently, and if the amount exceeds 10 parts by mass, the balance among the physical properties tends to deteriorate.

The peroxide cross-linking agent (C) may be any peroxide that can easily generate peroxy radicals in the presence of heat or a redox system. Specific examples thereof include organic peroxides such as 1,1-bis(t-butylperoxy)-3,5,5-trimethylcyclohexane, 2,5-dimethylhexane-2,5-dihydroperoxide, di-t-butyl peroxide, t-butyl cumyl peroxide, dicumyl peroxide, α,α-bis(t-butylperoxy)-p-diisopropylbenzene, α,α-bis(t-butylperoxy)-m-diisopropylbenzene, 2,5-dimethyl-2,5-di(t-butylperoxy) hexane, 2,5-dimethyl-2,5-di(t-butylperoxy)-hexyne-3, benzoyl peroxide, t-butylperoxybenzene, t-butyl peroxybenzoate, t-butyl peroxymaleate, and t-butylperoxyisopropylcarbonate. Among these, 2,5-dimethyl-2,5-di(t-butylperoxy)hexane or 2,5-dimethyl-2,5-di(t-butylperoxy)-hexyne-3 is preferable.

It is preferable that the fluoroelastomer composition further include a cross-linking accelerator. This cross-linking accelerator is preferably a compound containing two or more double bonds. Any compound containing two or more double bonds is basically effective as long as it is peroxide-vulcanizable, in other words, it has a reaction activity against peroxy radicals and polymer radicals. Examples thereof include, but are not limited to, polyvalent vinyl compounds, polyvalent allyl compounds, and polyvalent (meth)acrylates. Preferable examples thereof include triallyl cyanurate, triallyl isocyanurate, fluorinated triallyl isocyanurate, triacrylformal, triallyl trimellitate, ethylene bismaleimide, N,N'-m-phenylene bismaleimide, dipropargyl terephthalate, diallyl phthalate, tetraallyl terephthalamide, tris(diallylamine)-s-triazine, triallyl phosphite, N,N-diallyl acrylamide, and trimethylolpropane trimethacrylate. Among these, triallyl isocyanurate is preferable.

The amount of the cross-linking accelerator to be blended is, with respect to 100 parts by mass of the fluoroelastomer (A), preferably 0.01 to 10 parts by mass, more preferably 0.1 to 9 parts by mass, and particularly preferably 0.2 to 8 parts by mass. If the amount of the cross-linking accelerator is less than 0.01 parts by mass, undercuring tends to occur, and if the amount exceeds 10 parts by mass, the balance among the physical properties tends to deteriorate.

The fluoroelastomer composition preferably further includes a low self-polymerizable cross-linking accelerator as a cross-linking accelerator. The term "low self-polymerizable cross-linking accelerator" means a compound having a low self-polymerizability, unlike triallyl isocyanurate (TAIC), which is well known as a cross-linking accelerator.

Examples of the low self-polymerizable cross-linking accelerator include trimethallyl isocyanurate (TMAIC) represented by the following formula

[Formula 4]

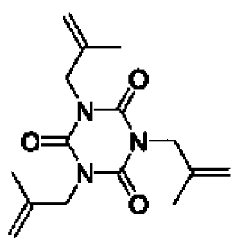

p-quinone dioxime represented by the following formula

[Formula 5]

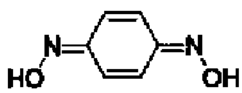

p,p'-dibenzoylquinone dioxime represented by the following formula

[Formula 6]

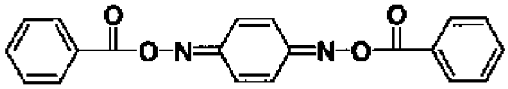

maleimide represented by the following formula

[Formula 7]

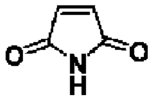

N-phenylene maleimide represented by the following formula

[Formula 8]

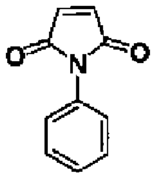

and N,N'-phenylene bismaleimide represented by the following formula

[Formula 9]

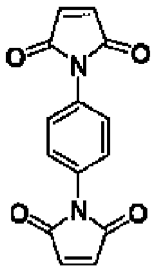

The low self-polymerizable cross-linking accelerator is preferably trimethallyl isocyanurate (TMAIC).
The cross-linking accelerator used in the peroxide cross-linking system may be bisolefin.
Examples of the bisolefin that can be used as the cross-linking accelerator include bisolefins represented by the following formula:

$$R^3R^4C=CR^5\text{-}Z\text{-}CR^6=CR^7R^8$$

wherein $R^3$, $R^4$, $R^5$, $R^6$, $R^7$, and $R^8$ are the same as or different from each other, and are each H or an alkyl group having 1 to 5 carbon atoms; and Z is a linear or branched, at least partially fluorinated alkylene or cycloalkylene group having 1 to 18 carbon atoms which optionally includes an oxygen atom, or is a (per)fluoropolyoxyalkylene group.
Z is preferably a perfluoroalkylene group having 4 to 12 carbon atoms, and $R^3$, $R^4$, $R^5$, $R^6$, $R^7$, and $R^8$ are each

preferably a hydrogen atom.

If Z is a (per)fluoropolyoxyalkylene group, it is preferably a (per)fluoropolyoxyalkylene group represented by the following formula

$$-(Q)_p-CF_2O-(CF_2CF_2O)_m-(CF_2O)_n-CF_2-(Q)_p-$$

wherein Q is an alkylene or oxyalkylene group having 1 to 10 carbon atoms; p is 0 or 1; and m and n are integers satisfying an m/n ratio of 0.2 to 5 and allowing the (per)fluoropolyoxyalkylene group to have a molecular weight in the range of 500 to 10000, and preferably 1000 to 4000. In this formula, Q is preferably selected from $-CH_2OCH_2-$ and $-CH_2O(CH_2CH_2O)_sCH_2-$ wherein s = 1 to 3.

Preferable examples of the bisolefin include

$CH_2=CH-(CF_2)_4-CH=CH_2$,

$CH_2=CH-(CF_2)_6-CH=CH_2$,

and

bisolefins represented by the following formula

$$CH_2=CH-Z^1-CH=CH_2$$

wherein $Z^1$ is $-CH_2OCH_2-CF_2O-(CF_2CF_2O)_m-(CF_2O)_n-CF_2-CH_2OCH_2-$; and m/n is 0.5.

Among these, 3,3,4,4,5,5,6,6,7,7,8,8-dodecafluoro-1, 9-decadiene represented by $CH_2=CH-(CF_2)_6-CH=CH_2$ is preferable.

The fluoroelastomer composition may optionally include, to the extent that the effects of the present disclosure are not impaired, any usual rubber compounding agent, such as a filler, a processing aid, a plasticizer, a colorant, a tackifier, an adhesive aid, an acid acceptor, a pigment, a flame retarder, a lubricant, a photostabilizer, a weather-resistance stabilizer, an antistatic agent, an ultraviolet absorber, an antioxidant, a release agent, a foaming agent, a perfume, an oil, and a softening agent, as well as other polymers such as polyethylene, polypropylene, polyamide, polyester, and polyurethane.

Examples of the filler include metal oxides such as calcium oxide, titanium oxide, aluminum oxide, and magnesium oxide; metal hydroxides such as magnesium hydroxide, aluminum hydroxide, and calcium hydroxide; carbonates such as magnesium carbonate, aluminum carbonate, calcium carbonate, and barium carbonate; silicates such as magnesium silicate, calcium silicate, sodium silicate, and aluminum silicate; sulfates such as aluminum sulfate, calcium sulfate, and barium sulfate; synthetic hydrotalcite; metal sulfide such as molybdenum disulfide, iron sulfide, and copper sulfide; and diatomite, asbestos, lithopone (zinc sulfide/barium sulfide), graphite, carbon fluoride, calcium fluoride, coke, quartz fine powder, talc, mica powder, wollastonite, carbon fiber, aramid fiber, various whiskers, glass fiber, organic reinforcing agents, organic fillers, polytetrafluoroethylene, mica, silica, celite, and clay. Examples of the acid acceptor include calcium oxide, magnesium oxide, lead oxide, zinc oxide, magnesium hydroxide, calcium hydroxide, aluminum hydroxide, and hydrotalcite. These compounds may be used singly, or two or more of them may be blended as appropriate. These compounds may be added at any step of the kneading process to be mentioned later. It is preferable to add them when the fluoroelastomer (A) and the carbon black (B) are kneaded in a closed kneader or a roll kneader.

Examples of the processing aid include higher fatty acids such as stearic acid, oleic acid, palmitic acid, and lauric acid; higher fatty acid salts such as sodium stearate and zinc stearate; higher fatty acid amides such as stearic acid amide and oleic acid amide; higher fatty acid esters such as ethyl oleate; petroleum waxes such as carnauba wax and ceresin wax; polyglycols such as ethylene glycol, glycerin, and diethylene glycol; aliphatic hydrocarbons such as vaseline, paraffin wax, naphthene, and terpene; and silicone oils, silicone polymers, low molecular weight polyethylene, phthalic acid esters, phosphoric acid esters, rosin, (halogenated) dialkylamines, surfactants, sulfone compounds, fluorine auxiliary agents, and organic amine compounds.

In particular, the acid acceptor is a preferable compounding agent because the presence thereof in kneading of the fluoroelastomer (A) and the carbon black (B) in a closed kneader or a roll kneader improves the reinforcibility.

From the viewpoint of reinforcibility, preferable among the above acid acceptors are metal hydroxides such as calcium hydroxide; metal oxides such as magnesium oxide and zinc oxide; and hydrotalcite, for example.

The amount of the acid acceptor to be blended is preferably 0.01 to 10 parts by mass with respect to 100 parts by mass of the fluoroelastomer (A). When the amount of the acid acceptor is too large, the physical properties tend to deteriorate. When the amount is too small, reinforcibility tends to be impaired. From the viewpoint of reinforcibility, the

amount to be blended is still more preferably 0.1 parts by mass or more with respect to 100 parts by mass of the fluoroelastomer (A). From the viewpoint of physical properties and easy kneading, the amount is preferably 8 parts by mass or less, and more preferably 5 parts by mass or less.

Examples of the oil include castor oil, rapeseed oil, peanut oil, olive oil, soybean oil, cottonseed oil, corn oil, and sunflower oil.

The fluoroelastomer composition according to this embodiment preferably has, in a dynamic viscoelasticity test (measurement frequency: 1 Hz, measurement temperature: 100°C) using a rubber process analyzer (RPA), a difference δG' (G' (1%) - G' (100%)) between a shear modulus G' (1%) at 1% dynamic strain and a shear modulus G' (100%) at 100% dynamic strain at the time of non-crosslinking of 300 kPa or more and 5000 kPa or less. By setting δG' (G' (1%) - G' (100%)) in the above range, a carbon gel network sufficient to obtain a high tensile strength can be formed, and a flexible carbon gel network for obtaining elongation can be reinforced and formed. δG' (G' (1%) - G' (100%)) is more preferably 400 kPa or more and 4000 kPa or less, and further preferably 500 kPa or more and 3000 kPa or less. The dynamic viscoelasticity test using a rubber process analyzer (RPA) can be performed by the procedure described below, for example. First, a rubber process analyzer RPA-2000 (manufactured by Alpha Technologies) is used to measure the strain dispersion of the fluoroelastomer composition under the conditions of a measurement frequency of 1 Hz and a measurement temperature of 100°C to obtain the shear modulus G'. At this time, G' (1%) and G' (100%) are calculated by determining the dynamic strain at 1% and 100%, respectively. δG' (G' (1%) - G' (100%)) is calculated using the determined G' (1%) and G' (100%).

Next, a method for producing the fluoroelastomer composition according to this embodiment will be described. The fluoroelastomer composition can be produced using, for example, a closed kneader or a roll kneader. Specifically, it is preferable to produce the fluoroelastomer composition by the following production method (1) from the viewpoint that a fluoroelastomer composition that provides a crosslinked product having much better resistance to crack growth at high temperature can be obtained.

The method for producing the fluoroelastomer composition according to this embodiment is a method for producing a fluoroelastomer composition including 10 to 60 parts by mass of the carbon black (B) and 0.1 to 10 parts of the peroxide cross-linking agent (C) per 100 parts by mass of the peroxide-crosslinkable fluoroelastomer (A), wherein the method comprises:

(1) step (1-1) of obtaining an intermediate composition by kneading the fluoroelastomer (A) and the carbon black (B) using a closed kneader or a roll kneader until a maximum temperature reaches 80 to 220°C;

step (1-2) of cooling the intermediate composition to a temperature less than 50°C; and
step (2-1) of kneading the cooled intermediate composition until the maximum temperature reaches a temperature of 10°C or more and less than 80°C to obtain a fluoroelastomer composition.

Step (1-1) is a step of kneading the fluoroelastomer (A) and the carbon black (B) until the maximum temperature reaches 80 to 220°C to obtain an intermediate composition.

Step (1-1) is characterized by kneading the fluoroelastomer (A) and the carbon black (B) at high temperature. By going through step (1-1), a fluoroelastomer composition that provides a crosslinked fluoroelastomer having excellent resistance to crack growth at high temperature can be produced.

The kneading in step (1-1) is performed using a closed kneader or a roll kneader. The kneading in step (1-1) is preferably performed using a closed kneader because this allows kneading at high temperature. Examples of the closed kneader include tangential closed kneaders such as a Banbury mixer, intermeshing closed kneaders such as an Intermix, pressure kneaders, single-screw kneaders, and twin-screw kneaders.

In the case of using a closed kneader, the average shear rate of the rotor is preferably 20 to 1000 (1/sec), more preferably 50 to 1000 (1/sec), further preferably 100 to 1000 (1/sec), still further preferably 200 to 1000 (1/sec), and particularly preferably 300 to 1000 (1/sec).

The average shear rate (1/sec) is calculated by the following formula.

$$\text{Average shear rate (1/sec)} = (\pi \times D \times R)/(60\ (\text{sec}) \times c)$$

D: Rotor diameter or roll diameter (cm)
R: Rotational speed (rpm)
c: Tip clearance (cm, distance between the rotor and the casing or the distance between the rolls)

In step (1-1), the peroxide cross-linking agent (C) and/or cross-linking accelerator may be further kneaded. The fluoroelastomer (A), the carbon black (B), and the peroxide cross-linking agent (C) and/or cross-linking accelerator may be

placed into the closed kneader at the same time and then kneaded, or the fluoroelastomer (A) and the peroxide cross-linking agent (C) and/or cross-linking accelerator may be kneaded and then the carbon black (B) may be kneaded. Further, in step (1-1), it is also preferable to further knead a processing aid and/or an acid acceptor.

The kneading in step (1-1) is performed until the maximum temperature of the matter being kneaded reaches 80°C to 220°C. The kneading is preferably performed until the maximum temperature reaches 120°C or more and 200°C or less. The maximum temperature can be checked by measuring the temperature of the kneaded matter immediately after it is discharged from the kneader.

In production method (1), step (1-2) is a step of cooling the intermediate composition obtained in step (1-1) to a temperature less than 50°C. The intermediate composition obtained in step (1-1) is at a temperature of 80°C to 220°C. Performing step (2-1) after sufficiently cooling the intermediate composition allows a fluoroelastomer composition to be produced that provides a crosslinked fluoroelastomer having excellent resistance to crack growth at high temperature. Step (1-2) is preferably performed such that the whole intermediate composition is cooled to a temperature within the above range. The lower limit of the cooling temperature may be any value, and may be 10°C.

In step (1-2), it is also preferable to cool the intermediate composition while kneading the intermediate composition using a roll kneader and/or a sheet molding machine.

Step (1-1) and step (1-2) may be repeated any number of times. In the case of repeating step (1-1) and step (1-2), it is preferable to perform the kneading of the intermediate composition until the maximum temperature reaches 120°C to 220°C, and more preferably until the maximum temperature reaches 120°C to 140°C. In the case of repeating step (1-1) and step (1-2), the kneading may be performed using a closed kneader or using a roll kneader. A closed kneader is preferable.

In the case of using a roll kneader, the average shear rate of the rotor is preferably 20 (1/sec) or more, more preferably 50 (1/sec) or more, further preferably 100 (1/sec) or more, still further preferably 200 (1/sec) or more, and particularly preferably 300 (1/sec) or more, and is preferably 1000 (1/sec) or less.

Production method (1) also preferably comprises a step of placing the fluoroelastomer (A) and the carbon black (B) into a closed kneader or a roll kneader, preferably a closed kneader. In this step, the peroxide cross-linking agent (C) and/or cross-linking accelerator may also be added, and a processing aid and/or an acid acceptor may also be added.

Step (1-1) may also include a step of adding an additive before the intermediate composition is discharged. One additive may be used, or two or more additives may be used. The additive(s) may be added once or multiple times. If two or more additives are added, they may be added at the same time or may be added at different times. Further, one additive may be added multiple times. One example of the "step of adding an additive before the intermediate composition is discharged" is a step of adding a carbon black (B') different from the carbon black (B) initially added in step (1-1) before the intermediate composition is discharged.

Also in the case of repeating step (1-1) and step (1-2), each step (1-1) may include the above "step of adding an additive before the intermediate composition is discharged." For example, in the second time step (1-1) is carried out, a carbon black (B') different from the carbon black used in the first time step (1-1) is carried out may be additionally added.

In production method (1), step (2-1) is a step of kneading the cooled intermediate composition obtained in step (1-2) to obtain a fluoroelastomer composition.

Step (2-1) is a step of further kneading the intermediate composition that is sufficiently cooled in step (1-2), and is an important step for improving the resistance to crack growth of the crosslinked fluoroelastomer at high temperature.

It is preferable to perform the kneading in step (2-1) until the maximum temperature of the composition reaches a temperature of 10°C or more and less than 140°C. If the maximum temperature of the composition during the kneading is too high, the method may fail to provide a fluoroelastomer composition that provides a crosslinked fluoroelastomer having excellent tensile properties at high temperature.

Step (2-1) may further include a step of kneading cooled intermediate compositions that are obtained in step (1-2) and are different from each other. The kneading in this case has only to be performed until the maximum temperature of the mixture of the different intermediate compositions reaches a temperature of 10°C or more and less than 140°C.

Production method (1) preferably further comprises step (2-2) of repeating step (2-1) m-1 times (m is an integer of 2 or more) after step (2-1) is performed. Repeating step (2-1) twice or more in total enables a fluoroelastomer composition that provides a crosslinked fluoroelastomer having excellent tensile properties at high temperature to be stably produced. The above-mentioned m is preferably an integer of 5 or more, more preferably an integer of 10 or more, further preferably an integer of 30 or more, and particularly preferably an integer of 50 or more. It is also preferable to include a step of cooling the intermediate composition before each kneading in step (2-2).

The kneading in each of step (2-1) and step (2-2) may be performed using the above-described closed kneader or roll kneader.

Step (2-1) and step (2-2) are preferably steps of kneading the intermediate composition by placing the intermediate composition into a roll kneader and tightly milling it.

Figure 2 schematically illustrates a kneading method by tight milling. As illustrated in Figure 2(a), an intermediate composition 13 is placed into an open roll 10 provided with a first roll 11 and a second roll 12. The first roll 11 and the second

roll 12 rotate at different speeds in the respective directions indicated by the arrows. Next, as illustrated in Figure 2(b), the placed intermediate composition 13 is passed between the first roll 11 and the second roll 12 for sheeting under a shear force. Then, as illustrated in Figure 2(c), a sheeted intermediate composition 14 is rolled up at an arbitrary site.

The mechanical properties of the crosslinked product at high temperature can be improved even by a single tight milling. However, in order to achieve even better mechanical properties at high temperature, the tight milling is preferably performed m times in total (m is an integer of 2 or more). The above-mentioned m is preferably an integer of 5 or more, more preferably an integer of 10 or more, further preferably an integer of 30 or more, and still further preferably an integer of 50 or more.

Production method (1) preferably further comprises a step of kneading the fluoroelastomer composition obtained in step (2-1) or step (2-2) with the peroxide cross-linking agent (C) and/or cross-linking accelerator. As described above, the peroxide cross-linking agent (C) and/or cross-linking accelerator may also be kneaded in step (1-1).

The peroxide cross-linking agent (C) and the cross-linking accelerator may be blended and kneaded simultaneously, or the cross-linking accelerator may be blended and kneaded first and then the peroxide cross-linking agent (C) may be blended and kneaded. In the case of kneading in step (1-1), the kneading conditions of the peroxide cross-linking agent (C) and the cross-linking accelerator may be the same as those in the above-described step (1-1) except that the maximum kneading temperature is 130°C or less. Among those conditions, it is preferable to perform the kneading using an open roll, a closed kneader, or the like set to have an average rotor speed of 20 (1/sec) or more, preferably 50 (1/sec) or more, more preferably 100 (1/sec) or more, further preferably 200 (1/sec) or more, and particularly preferably 300 (1/sec) or more. In the case of kneading the fluoroelastomer composition obtained in step (2-1) or step (2-2) with the peroxide cross-linking agent (C) and/or cross-linking accelerator, it is preferable to perform the kneading such that the maximum temperature is less than 130°C.

Other than the above-described production method (1), for example, the following production method (2) can be employed.

(2) A method in which a predetermined amount of each of the fluoroelastomer (A), the carbon black (B), and optionally the processing aid and/or an acid acceptor is placed into a closed kneader or a roll kneader, and kneading is performed under conditions in which the average shear rate of the rotor is 20 (1/sec) or more, preferably 50 (1/sec) or more, more preferably 100 (1/sec) or more, further preferably 200 (1/sec) or more, and particularly preferably 300 (1/sec) or more and a maximum kneading temperature Tm is 80 to 220°C (preferably 120 to 200°C). The kneading in production method (2) is preferably carried out using a closed kneader from the viewpoint that kneading at high temperature is possible.

The fluoroelastomer composition obtained by method (2) does not contain the peroxide cross-linking agent (C) or a cross-linking accelerator. Further, the kneading of method (2) may be carried out a plurality of times. In the case of performing the kneading a plurality of times, the kneading conditions for the second and subsequent times may be the same as those in method (2) described above, except that the maximum kneading temperature Tm is 140°C or less.

One method for preparing the fluoroelastomer composition of the present invention based on production method (2) is, for example, a method in which the peroxide cross-linking agent (C) and/or cross-linking accelerator are further blended and kneaded in the fluoroelastomer composition obtained by method (2) or obtained by repeating method (2) a plurality of times.

The peroxide cross-linking agent (C) and the cross-linking accelerator may be blended and kneaded simultaneously, or the cross-linking accelerator may be blended and kneaded first and then the peroxide cross-linking agent (C) may be blended and kneaded. The kneading conditions of the cross-linking agent (C) and the cross-linking accelerator may be the same as those in method (2) described above, except that the maximum kneading temperature Tm is 130°C or less.

Another method for preparing the fluoroelastomer composition of the present invention is, for example, a method in which a predetermined amount of each of the fluoroelastomer (A), the carbon black (B), and the peroxide cross-linking agent (C) and/or cross-linking accelerator is placed into a roll kneader in an appropriate order, and kneading is performed under conditions in which the average shear rate of the rotor is 20 (1/sec) or more, preferably 50 (1/sec) or more, more preferably 100 (1/sec) or more, further preferably 200 (1/sec) or more, and particularly preferably 300 (1/sec) or more and a maximum kneading temperature Tm is 130°C or less.

The crosslinked fluoroelastomer can be obtained by crosslinking the above-described fluoroelastomer composition.

The method for crosslinking the fluoroelastomer composition may be appropriately selected, and examples thereof include methods that are generally employed in the rubber industry such as compression molding, injection molding, transfer molding, roll steaming, and other such molding methods, as well as crosslinking methods using an autoclave and the like. If secondary crosslinking is required depending on the purpose of use of the crosslinked product, oven crosslinking may be further carried out.

Next, the crosslinked fluoroelastomer according to one embodiment of the present disclosure will be described below. The crosslinked fluoroelastomer according to this embodiment is a crosslinked fluoroelastomer obtained by peroxide-crosslinking a fluoroelastomer composition including the peroxide-crosslinkable fluoroelastomer (A), the carbon

black (B), and the peroxide cross-linking agent (C).

It is preferable to obtain this crosslinked fluoroelastomer from the fluoroelastomer composition described above, and it is also preferable to obtain it by the production method described above.

The crosslinked fluoroelastomer according to this embodiment has a hardness at 25°C of 60 to 90. The hardness of the crosslinked fluoroelastomer can be appropriately adjusted by selecting the amounts of the carbon black (B), the peroxide cross-linking agent (C), and the cross-linking accelerator or ordinary rubber compounding agent to be blended. If the hardness at 25°C is too high, handling at room temperature is more difficult, and if the hardness at 25°C is too low, the reinforcibility of the rubber is insufficient and resistance to crack growth at high temperature deteriorates. From this viewpoint, the hardness at 25°C is more preferably 87 or less, and further preferably 85 or less, and is more preferably 70 or more, and further preferably 75 or more.

The hardness (value after 3 seconds) is measured according to JIS K6253-3 with a durometer (type A) at a measurement temperature of 25°C.

From the viewpoint of suppressing fine initial cracks and improving resistance to crack growth at high temperature, the number of foreign particles having an aspect ratio of 1.1 or less and a Heywood diameter of 5 μm present on a fracture surface obtained by tensile fracture of the crosslinked fluoroelastomer at 170°C is 25/mm$^2$ or less. The number of foreign particles is preferably 0/mm$^2$ or more and 20/mm$^2$ or less, and more preferably 0/mm$^2$ or more and 10/mm$^2$ or less. The number of foreign particles is measured by observing the fracture surface with an SEM. More specifically, twelve locations evenly located on the fracture surface are photographed at an observation magnification of 500, and the number of foreign particles having an aspect ratio of 1.1 or less and a diameter (Heywood diameter) of 5 μm or more is measured for each image. The SEM observation is preferably carried out by vapor-depositing Pt on the fracture surface of a test piece for a tensile test of the crosslinked fluoroelastomer, and observing the surface.

The crosslinked fluoroelastomer may have a surface coated with a lubricant. The lubricant applied can reduce the coefficient of friction and, when the crosslinked fluoroelastomer is brought into contact with a material in a dynamic environment, can minimize adhesion or sticking of the crosslinked fluoroelastomer to the material. Examples of the lubricant include liquid lubricants such as liquid paraffin, fatty oils, naphthenes, fluorine oil, silicone oil, and ionic liquid; semisolid lubricants such as grease and vaseline; and solid lubricants such as molybdenum disulfide, tungsten disulfide, polytetrafluoroethylene, polyethylene, talc, mica, graphite, boron nitride, silicon nitride, fluorinated graphite, paraffin wax, higher fatty acids, higher fatty acid salts, higher fatty acid amides, and higher fatty acid esters. Examples of the applying method include a method of directly applying a lubricant and a method of dispersing or dissolving a lubricant in water or an organic solvent and then applying the dispersion or solution.

The tensile elongation at break at 170°C is more preferably 250% or more, and further preferably 300% or more, and is preferably 600% or less, and more preferably 500% or less.

The tensile elongation at break can be determined by the following method. The tensile elongation at break is measured using a No. 6 dumbbell with a chuck distance of 50 mm and a tensile rate of 500 mm/min according to JIS K6251 using a tensile tester having a constant temperature bath. The measurement temperature is 170°C.

From the viewpoint of being suitable for use in a high-temperature environment and the like, the crosslinked fluoroelastomer preferably has a tensile strength at break of 1 MPa or more, more preferably 1.5 MPa or more, and particularly preferably 2 MPa or more, and preferably 10 MPa or less, and particularly preferably 8 MPa or less, at 170°C.

The tensile strength at break can be determined by the following method. The tensile strength at break is measured using a No. 6 dumbbell with a chuck distance of 50 mm and a tensile rate of 500 mm/min according to JIS K6251 using a tensile tester having a constant temperature bath. The measurement temperature is 170°C.

The crosslinked fluoroelastomer can be applied to various uses, and can be particularly suitably used as a bladder for tire vulcanization. A crosslinked fluoroelastomer which is a bladder for tire vulcanization is also one aspect of the present disclosure.

The fluoroelastomer composition and the crosslinked fluoroelastomer can be applied to various uses, and may be particularly suitably applied to the following uses.

(1) Hose

The hose may be a monolayer hose consisting only of a crosslinked fluoroelastomer which is obtained by crosslinking the fluoroelastomer composition of the present disclosure, or may be a multilayer hose having a laminate structure with another layer. Further, the hose may be a monolayer hose consisting only of the crosslinked fluoroelastomer of the present disclosure, or may be a multilayer hose having a laminate structure with another layer.

Examples of the monolayer hose include exhaust gas hoses, EGR hoses, turbocharger hoses, fuel hoses, brake hoses, and oil hoses.

Examples of the multilayer hose also include exhaust gas hoses, EGR hoses, turbocharger hoses, fuel hoses, brake hoses, and oil hoses.

A turbo system is a system provided for many diesel engines. In this system, exhaust gas from the engine is

delivered to and rotates a turbine so that a compressor connected to the turbine is driven, whereby the compression ratio of the air supplied to the engine is increased and the power output is improved. The turbo system, which utilizes exhaust gas from the engine and achieves a high power output, leads to miniaturization of engines, low power consumption of automobiles, and cleaner exhaust gas emission.

The turbocharger hoses are used in turbo systems as hoses for delivering compressed air to engines. In order to effectively utilize narrow space in the engine room, it is advantageous for these hoses to be made of rubber, which has excellent flexibility and elasticity. Typically used multilayer hoses include an inner layer which is a rubber (especially, fluoroelastomer) layer having excellent heat aging resistance and oil resistance and an outer layer which is a silicone rubber or acrylic rubber layer. The area surrounding an engine, such as the engine room, is in a severe environment where it is exposed to high temperature and vibration. Thus, the components in this area need to have not only excellent heat aging resistance but also excellent mechanical properties at high temperature.

The hose can satisfy the above requirements at high levels and can provide a turbocharger hose having excellent characteristics when it includes, as a monolayer or multilayer rubber layer, a crosslinked fluoroelastomer layer obtained by crosslinking the fluoroelastomer composition of the present disclosure or a crosslinked fluoroelastomer layer formed from the crosslinked fluoroelastomer of the present disclosure.

In multilayer hoses other than the turbocharger hoses, examples of the layers made of a different material include layers made of a different rubber, layers made of thermoplastic resin, various fiber-reinforced layers, and metal foil layers.

If chemical resistance and elasticity are particularly required, the different rubber is preferably at least one rubber selected from the group consisting of acrylonitrile-butadiene rubber or a hydrogenated rubber thereof, a rubber blend of acrylonitrile-butadiene rubber and polyvinyl chloride, a fluoroelastomer, epichlorohydrin rubber, EPDM, and acrylic rubber. More preferable is at least one rubber selected from the group consisting of acrylonitrile-butadiene rubber or a hydrogenated rubber thereof, a rubber blend of acrylonitrile-butadiene rubber and polyvinyl chloride, a fluoroelastomer, and epichlorohydrin rubber.

The thermoplastic resin is preferably at least one thermoplastic resin selected from the group consisting of fluororesin, polyamide resin, polyolefin resin, polyester resin, polyvinyl alcohol resin, polyvinyl chloride resin, and polyphenylene sulfide resin. More preferable is at least one thermoplastic resin selected from the group consisting of fluororesin, polyamide resin, polyvinyl alcohol resin, and polyphenylene sulfide resin.

In the case of producing a multilayer hose, a surface treatment may optionally be performed. This surface treatment is not limited as long as it enables adhesion. Examples thereof include discharge treatment, such as plasma discharge treatment and corona discharge treatment, and metal sodium/naphthalene liquid treatment which is a wet process. Primer treatment is also preferable as the surface treatment. The primer treatment can be performed in the usual manner. The primer treatment may be applied to the surface of fluoroelastomer where no surface treatment is performed. However, it is more effective to perform plasma discharge treatment, corona discharge treatment, metal sodium/naphthalene liquid treatment, or the like before the primer treatment.

The hose including a crosslinked fluoroelastomer layer obtained by crosslinking the fluoroelastomer composition of the present disclosure or a crosslinked fluoroelastomer layer formed from the crosslinked fluoroelastomer of the present disclosure particularly needs to have excellent elasticity at room temperature so as to be easily attached to a metal pipe. Hoses suffer from the following problem: cracks form at sites that are exposed to high temperature or under increased strain. For such uses, a fluoroelastomer composition that provides a crosslinked product having not only excellent heat resistance but also excellent tensile physical properties at high temperature and tensile durability, as disclosed in the present disclosure, or the crosslinked fluoroelastomer of the present disclosure can suitably be used, minimizing generation of cracks and preventing growth of cracks. When the fluoroelastomer composition contains 5 to 20 parts by mass of the carbon black (B) with respect to 100 parts by mass of the fluoroelastomer (A), the hose exhibits excellent elasticity (a low hardness) at room temperature, crack resistance, and resistance to crack growth.

The hose can suitably be used in the following fields.

In the field relating to production of semiconductors, such as semiconductor manufacturing devices, liquid crystal panel manufacturing devices, plasma panel manufacturing devices, plasma addressed liquid crystal panels, field emission display panels, and solar cell substrates, the hose can be used for devices exposed to high temperature, such as CVD devices, dry etching devices, wet etching devices, oxidation and diffusion devices, sputtering devices, ashing devices, washing devices, ion implantation devices, and exhaust devices.

In the field of automobiles, the hose can be used for engines and peripherals of automatic transmissions, and can be used for turbocharger hoses, as well as EGR hoses, exhaust gas hoses, fuel hoses, oil hoses, brake hoses, and the like.

In addition, the hose can be used as a hose in fields relating to aircraft, rockets, shipping, chemical plants, analysis and physical and chemical instruments, food plant machinery, equipment for nuclear power plants, and the like.

(2) Sealant

A sealant used in petroleum drilling equipment can suffer from the problem of breakage due to rapid decompression when the pressure in a deep well is suddenly released. Further, the sealant is used in an environment where the temperature is high and the sealant is exposed to gases such as hydrogen sulfide. The production conditions in the petroleum and gas industry include high temperature and high pressure. Thus, the sealant including a crosslinked fluoroelastomer layer obtained by crosslinking the fluoroelastomer composition of the present disclosure needs to exhibit rapid gas decompression resistance, as well as excellent heat resistance and chemical resistance. For such a use, a fluoroelastomer composition that provides a crosslinked product having not only excellent heat resistance but also excellent tensile physical properties at high temperature and tensile durability, as disclosed in the present disclosure, or the crosslinked fluoroelastomer of the present disclosure can suitably be used. A crosslinked product having excellent tensile physical properties at high temperature (tensile strength at break, tensile elongation at break) and tensile durability has high gas decompression resistance and can avoid breakage (destruction, cracking) of the seal. When the fluoroelastomer composition contains 10 to 60 parts by mass of the carbon black (B) with respect to 100 parts by mass of the fluoroelastomer (A), the sealant of the present disclosure exhibits excellent heat resistance, chemical resistance, and rapid gas decompression resistance at high temperature and high pressure.

The sealant can suitably be used in the following fields.

Examples of the sealant include sealants such as gaskets and non-contact or contact packing (e.g., self-seal packing, piston rings, split ring packing, mechanical seals, and oil seals) requiring heat resistance, oil resistance, fuel oil resistance, resistance to antifreeze for engine cooling, and steam resistance for engine bodies, main drive systems, valve train systems, lubrication and cooling systems, fuel systems, and intake and exhaust systems of automobile engines; transmission systems of driveline systems; steering systems of chassis; braking systems; electrical parts (e.g., basic electrical parts, electrical parts of control systems, and electrical accessories); and the like.

Examples of sealants used for engine bodies of automobile engines include, but are not limited to, sealants such as cylinder head gaskets, cylinder head cover gaskets, sump packing, general gaskets, O-rings, packing, and timing belt cover gaskets.

Examples of sealants used for main drive systems of automobile engines include, but are not limited to, shaft seals such as crankshaft seals, and camshaft seals.

Examples of sealants used for valve train systems of automobile engines include, but are not limited to, valve stem oil seals of engine valves, and valve sheets of butterfly valves.

Examples of sealants used for lubrication and cooling systems of automobile engines include, but are not limited to, seal gaskets of engine oil coolers.

Examples of sealants used for fuel systems of automobile engines include, but are not limited to, oil seals of fuel pumps, filler seals and tank packing of fuel tanks, connector O-rings of fuel tubes, injector cushion rings, injector seal rings, and injector O-rings of fuel injection systems, flange gaskets of carburetors, and EGR sealants.

Examples of sealants used for intake and exhaust systems of automobile engines include, but are not limited to, intake manifold packing and exhaust manifold packing of manifolds, throttle body packing of throttles, and turbine shaft seals of turbochargers.

Examples of sealants used for transmission systems of automobiles include, but are not limited to, transmission-related bearing seals, oil seals, O-rings, and packing, and O-rings and packing of automatic transmissions.

Examples of sealants used for braking systems of automobiles include, but are not limited to, oil seals, O-rings, packing, piston cups (rubber cups) for master cylinders, caliper seals, and boots.

Examples of sealants used for electrical accessories of automobiles include, but are not limited to, O-rings and packing of automobile air conditioners.

The sealant is particularly suitable for sensor sealants (bushes), and is specifically suitable for oxygen sensor sealants, nitrogen oxide sensor sealants, sulfur oxide sensor sealants, and the like. The O-rings may be square rings.

In addition to the field of automobiles, the sealant can be used, without limitation, in a wide variety of fields, such as in the fields of aircraft, rockets, shipping, oilfield drilling (e.g., packer seals, MWD seals, and LWD seals), chemistry (e.g., chemical plants), chemicals (e.g., pharmaceuticals), photography (e.g., film processors), printing (e.g., printers), coating (e.g., coating equipment), analysis and physical and chemical instruments, food plant machinery, equipment for nuclear power plants, steel (e.g., sheet steel processing equipment), general industry, electric, fuel cells, and electronic components, and fields relating to on-site molding.

Examples of the sealant include oil-, chemical-, heat-, steam-, or weather-resistant packing, O-rings, and other sealants in transport such as shipping and aircraft; similar packing, O-rings, and sealants used in oilfield drilling; similar packing, O-rings, and sealants used in chemical plants; similar packing, O-rings, and sealants used in food plant equipment and food machinery (including household items); similar packing, O-rings, and sealants used in equipment for nuclear power plants; and similar packing, O-rings, and sealants used in general industrial parts.

(3) Belt

When a belt and belt parts are used under severe conditions, such as high temperature and a chemical (oil)

atmosphere, they are repeatedly stretched and compressed at the pulley portion. Thus, belts and belt parts including a crosslinked fluoroelastomer layer obtained by crosslinking the fluoroelastomer composition of the present disclosure need to have heat resistance and chemical resistance, as well as repeated tensile and compression characteristics at high temperature. Further, since belts have complicated shapes, such as wave cleats and side cleats, there may be the following problem: the belt is torn when removed from a molding die. For such uses, a fluoroelastomer composition that provides a crosslinked product having not only excellent heat resistance and chemical resistance, but also excellent tensile physical properties at high temperature and tensile durability, as disclosed in the present disclosure, or the crosslinked fluoroelastomer of the present disclosure can suitably be used. When the fluoroelastomer composition contains 5 to 60 parts by mass of the carbon black (B) with respect to 100 parts by mass of the fluoroelastomer (A), the belt and belt parts of the present disclosure exhibit excellent heat resistance, chemical resistance, and repeated tensile and compression characteristics at high temperature.

The crosslinked fluoroelastomer can suitably be used for the following belts.

The crosslinked fluoroelastomer can be used as a belt material for power transmission belts (including flat belts, V-belts, V-ribbed belts, and toothed belts) and transportation belts (conveyor belts). In the field relating to production of semiconductors, such as semiconductor manufacturing devices, liquid crystal panel manufacturing devices, plasma panel manufacturing devices, plasma addressed liquid crystal panels, field emission display panels, and solar cell substrates, the crosslinked fluoroelastomer can be used as a belt material for devices exposed to high temperature, such as CVD devices, dry etching devices, wet etching devices, oxidation and diffusion devices, sputtering devices, ashing devices, washing devices, ion implantation devices, and exhaust devices.

Examples of the flat belts include flat belts used for portions where the temperature becomes high, such as portions around engines of agricultural machinery, machine tools, and industrial machinery. Examples of the conveyor belts include conveyor belts for transporting bulk or particles of coal, smashed rock, earth and sand, ores, and wood chips in a high-temperature environment, conveyor belts used in iron mills, such as blast furnaces, and conveyor belts used for applications exposed to high temperature in high-precision machine assembling factories and food factories. Examples of the V-belts and V-ribbed belts include V-belts and V-ribbed belts for agricultural machinery, general equipment (e.g., OA equipment, printers, and dryers for business purposes), and automobiles. Examples of the toothed belts include toothed belts such as power transmission belts of transporting robots and power transmission belts of food machinery and machine tools, and toothed belts for automobiles, OA equipment, medical uses, and printers. In particular, timing belts are typical toothed belts for automobiles.

In multilayer belts, examples of the layers made of a different material include layers made of a different rubber, layers made of thermoplastic resin, various fiber-reinforced layers, canvas layers, and metal foil layers.

If chemical resistance and elasticity are particularly required, the different rubber is preferably at least one rubber selected from the group consisting of acrylonitrile-butadiene rubber or a hydrogenated rubber thereof, a rubber blend of acrylonitrile-butadiene rubber and polyvinyl chloride, a fluoroelastomer, epichlorohydrin rubber, EPDM, and acrylic rubber. More preferable is at least one rubber selected from the group consisting of acrylonitrile-butadiene rubber or a hydrogenated rubber thereof, a rubber blend of acrylonitrile-butadiene rubber and polyvinyl chloride, a fluoroelastomer, and epichlorohydrin rubber.

The thermoplastic resin is preferably at least one thermoplastic resin selected from the group consisting of fluororesin, polyamide resin, polyolefin resin, polyester resin, polyvinyl alcohol resin, polyvinyl chloride resin, and polyphenylene sulfide resin. More preferable is at least one thermoplastic resin selected from the group consisting of fluororesin, polyamide resin, polyvinyl alcohol resin, and polyphenylene sulfide resin.

In the case of producing a multilayer belt, a surface treatment may optionally be performed. This surface treatment is not limited as long as it enables adhesion. Examples thereof include discharge treatment, such as plasma discharge treatment and corona discharge treatment, and metal sodium/naphthalene liquid treatment which is a wet process. Primer treatment is also preferable as the surface treatment. The primer treatment can be performed in the usual manner. The primer treatment may be applied to the surface of fluoroelastomer where no surface treatment is performed. However, it is more effective to perform plasma discharge treatment, corona discharge treatment, metal sodium/naphthalene liquid treatment, or the like before the primer treatment.

(4) Damper rubber

The crosslinked fluoroelastomer can satisfy the characteristics required for damper rubber at high levels and can provide a damper rubber for automobiles having excellent characteristics when it is used for a monolayer or multilayer rubber layer of the damper rubber.

In a multilayer damper rubber other than the damper rubber for automobiles, examples of the layers made of a different material include layers made of a different rubber, layers made of thermoplastic resin, various fiber-reinforced layers, and metal foil layers.

If chemical resistance and elasticity are particularly required, the different rubber is preferably at least one rubber

selected from the group consisting of acrylonitrile-butadiene rubber or a hydrogenated rubber thereof, a rubber blend of acrylonitrile-butadiene rubber and polyvinyl chloride, a fluoroelastomer, epichlorohydrin rubber, EPDM, and acrylic rubber. More preferable is at least one rubber selected from the group consisting of acrylonitrile-butadiene rubber or a hydrogenated rubber thereof, a rubber blend of acrylonitrile-butadiene rubber and polyvinyl chloride, a fluoroelastomer, and epichlorohydrin rubber.

The thermoplastic resin is preferably at least one thermoplastic resin selected from the group consisting of fluororesin, polyamide resin, polyolefin resin, polyester resin, polyvinyl alcohol resin, polyvinyl chloride resin, and polyphenylene sulfide resin. More preferable is at least one thermoplastic resin selected from the group consisting of fluororesin, polyamide resin, polyvinyl alcohol resin, and polyphenylene sulfide resin.

In the case of producing a multilayer damper rubber, a surface treatment may optionally be performed. This surface treatment is not limited as long as it enables adhesion. Examples thereof include discharge treatment, such as plasma discharge treatment and corona discharge treatment, and metal sodium/naphthalene liquid treatment which is a wet process. Primer treatment is also preferable as the surface treatment. The primer treatment can be performed in the usual manner. The primer treatment may be applied to the surface of fluoroelastomer where no surface treatment is performed. However, it is more effective to perform plasma discharge treatment, corona discharge treatment, metal sodium/naphthalene liquid treatment, or the like before the primer treatment.

(5) Seismic isolation rubber

The crosslinked fluoroelastomer can provide a seismic isolation rubber having excellent characteristics when it is used for a rubber layer in seismic isolation rubber. Seismic isolation rubber is constantly exposed to the outside air, and therefore undergoes long-term deterioration from its surface due to oxygen, moisture, ozone, ultraviolet rays, radiation in the case of nuclear power, sea breezes at the seaside, and the like. Therefore, the side surface of seismic isolation rubber is covered with rubber having excellent weather resistance. The present fluoroelastomer composition not only has high resistance to crack growth, but also has excellent weather resistance and oxidation resistance of a fluoroelastomer, and therefore a long life can be expected.

In the case of producing seismic isolation rubber, a surface treatment may optionally be performed. This surface treatment is not limited as long as it enables adhesion. Examples thereof include discharge treatment, such as plasma discharge treatment and corona discharge treatment, and metal sodium/naphthalene liquid treatment which is a wet process. Primer treatment is also preferable as the surface treatment. The primer treatment can be performed in the usual manner. The primer treatment may be applied to the surface of fluoroelastomer where no surface treatment is performed. However, it is more effective to perform plasma discharge treatment, corona discharge treatment, metal sodium/naphthalene liquid treatment, or the like before the primer treatment.

Examples of uses as seismic isolation rubber include those as a seismic isolation device to protect a building from shaking during a disaster such as an earthquake, and as a support body that supports a structure such as a bridge.

(6) Diaphragm

A diaphragm including a crosslinked fluoroelastomer layer obtained by crosslinking the fluoroelastomer composition of the present disclosure needs to have repeated bending resistance in a high-temperature environment. For such a use, a fluoroelastomer composition that provides a crosslinked product having not only excellent heat resistance but also excellent tensile physical properties at high temperature and tensile durability, as disclosed in the present disclosure, or the crosslinked fluoroelastomer of the present disclosure can suitably be used. When the fluoroelastomer composition contains 5 to 30 parts by mass of the carbon black (B) with respect to 100 parts by mass of the fluoroelastomer (A), the diaphragm of the present disclosure exhibits excellent heat resistance, chemical resistance, and repeated bending resistance not only at room temperature but also at high temperature.

The crosslinked fluoroelastomer can suitably be used for the following diaphragms.

Examples of the uses of diaphragms for automobile engines include diaphragms for fuel systems, exhaust systems, braking systems, driveline systems, and ignition systems where characteristics such as heat resistance, oxidation resistance, fuel resistance, and low gas permeability are required.

Examples of diaphragms used for the fuel systems of automobile engines include diaphragms for fuel pumps, diaphragms for carburetors, diaphragms for pressure regulators, diaphragms for pulsation dampers, diaphragms for ORVR, diaphragms for canisters, and diaphragms for auto fuel cocks.

Examples of diaphragms used for the exhaust systems of automobile engines include diaphragms for wastegates, diaphragms for actuators, and diaphragms for EGR. Examples of diaphragms used for the braking systems of automobile engines include diaphragms for air brakes. Examples of diaphragms used for the driveline systems of automobile engines include diaphragms for oil pressure. Examples of diaphragms used for the ignition systems of automobile engines include diaphragms for distributors.

Examples of diaphragms for the uses other than automobile engines include those for the uses requiring characteristics such as heat resistance, oil resistance, chemical resistance, steam resistance, and low gas permeability, such as diaphragms for general pumps, diaphragms for valves, diaphragms for filter presses, diaphragms for blowers, diaphragms for air conditioners, diaphragms for controlling devices, diaphragms for water supply, diaphragms used in pumps for delivering hot water for hot-water supply, diaphragms for high-temperature vapor, diaphragms for semiconductor devices (e.g., diaphragms for transporting chemical liquids used in production steps), diaphragms for food processing equipment, diaphragms for liquid storage tanks, diaphragms for pressure switches, diaphragms used in prospecting and drilling petroleum (e.g., diaphragms for feeding lubricants in petroleum drilling pits), diaphragms for gas appliances (e.g., gas instantaneous hot-water heaters and gas meters), diaphragms for accumulators, diaphragms for air springs (e.g., suspensions), diaphragms for screw feeders for shipping, and diaphragms for medical artificial hearts.

(7) Hollow rubber molded article

The crosslinked fluoroelastomer can suitably be used for hollow rubber molded articles. Examples of the hollow rubber molded article include bladders, bellows-like molded articles, and primer bulbs.

(7-1) Bladder

The crosslinked fluoroelastomer can suitably be used for bladders used in vulcanization and building of tires (bladders for tire manufacturing).

In a usual tire production process, roughly two types of bladders are used, i.e., a bladder for tire building used in assembling the components of a tire to form a green tire (non-vulcanized tire) and a bladder for tire vulcanization used in vulcanization for giving the target shape of the tire as a product.

The crosslinked fluoroelastomer can be used for both bladders for tire building and bladders for tire vulcanization, and is preferably used for bladders for tire vulcanization which are repeatedly used under heating conditions, and thus are required to have high heat resistance and tensile characteristics at high temperature. Further, because the crosslinked fluoroelastomer according to the present disclosure has excellent resistance to crack growth at high temperature, it is particularly suitable for use as a bladder for tire vulcanization which is required to have high heat resistance and tensile characteristics at high temperature.

(7-2) Bellows-like molded article

A bellows structure is a structure having either or both of a series of mountain portions and a series of valley portions in the circumferential direction of a cylinder, and the mountain or valley portions may be in the form of circular waves or of triangular waves. Specific examples of the bellows-like molded article include joint parts such as flexible joints and expansion joints, boots, and grommets.

The joint parts are joints used for pipes and piping equipment, and are used for preventing vibrations and noises generated by piping systems, absorption of expansion and contraction and displacement due to temperature change and pressure change, absorption of dimensional changes, mitigation or prevention of influences due to earthquakes or land subsidence, and the like.

The flexible joints and expansion joints may be preferably used for shipbuilding piping, machinery piping such as in pumps and compressors, chemical plant piping, electric piping, piping in civil engineering works and waterworks, automobiles, and the like.

The boots may be preferably used as boots for various industries, including boots for automobiles (e.g., constant-velocity joint boots, dust covers, rack and pinion steering boots, pin boots, and piston boots), boots for agricultural machinery, boots for industrial vehicles, boots for construction machinery, boots for hydraulic machinery, boots for pneumatic machinery, boots for centralized lubrication systems, boots for liquid transportation, boots for firefighting, boots for liquefied gas transportation, and the like.

(7-3) Primer bulb

The primer bulb is a pump for delivering fuel to a carburetor (a float chamber of the carburetor) in advance so as to allow the engine to start easily. For example, the primer bulb may have one mountain portion in the circumferential direction of a cylinder, and the mountain portion is in the form of a circular wave. Examples of the primer bulb include primer bulbs for automobiles, shipping, aircraft, construction machinery, agricultural machinery, and mining machinery. For example, the crosslinked fluoroelastomer of the present disclosure is particularly useful as a primer bulb for shipping.

(8) Fluoroelastomer coating material composition

The fluoroelastomer composition of the present disclosure can also be applicable to fluoroelastomer coating material compositions. A coat obtained from the fluoroelastomer coating material composition exhibits excellent tensile physical properties and durability (tensile fatigue characteristics) at high temperature, and thus is less likely to break even under high-temperature conditions.
The fluoroelastomer coating material composition is preferably obtained by dissolving or dispersing the fluoroelastomer composition of the present disclosure in a liquid medium.
The fluoroelastomer coating material composition can be prepared by kneading the components constituting the fluoroelastomer composition by, for example, the aforementioned method, and then dissolving or dispersing the resulting fluoroelastomer composition in a liquid medium such as a ketone, ester, or ether.
The fluoroelastomer coating material composition may be directly applied to a base material made of metal, glass, resin, rubber, or the like, or may be applied to a primer layer formed from, for example, an epoxy coating material. Further, another coat (top coat layer) may be formed on the coat obtained from the fluoroelastomer coating material composition.
Examples of the coat obtained from the fluoroelastomer coating material composition include sheets and belts; sealants of sealing members; pre-coated metals; packing rubbers, O-rings, diaphragms, chemical-resistant tubes, drug stoppers, fuel hoses, valve seals, gaskets for chemical plants, and engine gaskets; and rolls (e.g., fixing rolls and pressure rolls) and transporting belts for OA equipment (e.g., copiers, printers, and faxes). The engine gaskets can be used as head gaskets of automobile engines, for example.

(9) Electric wire coat

The fluoroelastomer composition can also suitably be used for insulating coats for electric wires requiring heat resistance and elasticity (flexibility) and sheath materials constituting sheath layers disposed around insulating layers of electric wires, providing coats which exhibit excellent bending resistance at high temperature.
Examples of the insulating coats or sheath materials include insulating coats or sheath materials used for heat-resistant electric wires for automobiles, aircraft, and military vehicles particularly requiring heat resistance. Particularly preferable are insulating coats or sheath materials for coated electric wires used in an environment where the electric wire is brought into contact with transmission oil or engine oil of internal engines, or coated electric wires used in automatic transmissions or engine sumps of automobiles.

Examples

The fluoroelastomer composition and crosslinked fluoroelastomer according to the present disclosure will now be described with reference to Examples, but the present disclosure is not limited to these Examples.
The numerical values in the Examples were measured by the following methods.

(1) Number of foreign particles in carbon black

A carbon black/ethanol dispersion was adjusted so that the carbon black concentration was 0.1% by mass, and then treated with ultrasonic waves at an oscillation frequency of 35000 Hz for 2 hours. 1 ml of the obtained dispersion was collected, and then the collected dispersion was vacuum-filtered with the vacuum filtration device having a circular filtration surface with a diameter of 35 mm described above with reference to Figure 1 using a polycarbonate membrane filter (manufactured by ADVANTEC, pore size of 0.8 $\mu$m, pore density of $3 \times 10^7/cm^2$, mass of 0.9 $mg/cm^2$, thickness of 9 $\mu$m, approximately circular with a diameter of 47 mm). Then, Pt was vapor-deposited on the filter, and the surface was observed with an SEM (VE-9800, manufactured by Keyence Corporation). At an observation magnification of 500, nine arbitrary locations on the filtration surface were photographed, the number of foreign particles having an aspect ratio of 1.1 or less and a diameter (Heywood diameter) of 5 $\mu$m or more was measured for each image, and the number of foreign particles was counted per unit area. The measurement of the number of foreign particles was carried out using the software "Mac-View Version 4" manufactured by MOUNTECH Co., Ltd.

(2) Hardness of crosslinked fluoroelastomer

The hardness (value after 3 seconds) of the crosslinked fluoroelastomer was measured according to JIS K6253-3 using a durometer type A at a measurement temperature of 25°C.

(3) Number of foreign particles on the fracture surface of crosslinked fluoroelastomer

The number of foreign particles on the fracture surface was evaluated by observing the fracture surface of a test piece for a tensile test of the crosslinked fluoroelastomer. Specifically, a tensile test was carried out at 170°C using a No. 6 dumbbell with a chuck distance of 50 mm and a tensile rate of 500 mm/min according to JIS K6251 using a tensile tester having a constant temperature bath. Pt was vapor-deposited on the fracture surface of the test piece after the tensile test, and the fracture surface was observed with an SEM (VE-9800, manufactured by Keyence Corporation). At an observation magnification of 500, twelve locations evenly located on the fracture surface were photographed, the number of foreign particles having an aspect ratio of 1.1 or less and a diameter (Heywood diameter) of 5 μm or more was measured for each image, and the number of foreign particles was counted per unit area. The measurement of the number of foreign particles was carried out using the software "Mac-View Version 4" manufactured by MOUNTECH Co., Ltd.

(4) High temperature tensile fatigue test

A tensile fatigue test was performed at 150°C according to the procedure described below. The fatigue resistance test result at 150°C is an index of resistance to crack growth at high temperature. That is, in a fatigue resistance test at 150°C, the larger the number of cycles until 50% fracture, the higher the resistance to crack growth at high temperature. Using a tensile tester having a constant temperature bath, the temperature control temperature was set to 150°C, the chuck distance was set to 50 mm, the stroke was set to 50 mm, and the frequency was set to 2 Hz. The test piece was a No. 6 dumbbell, and the number of test pieces was eight. The maximum number of cycles was 10000, and the number of cycles when four test pieces were remaining was taken as the number of cycles until 50% fracture.

(5) Tire vulcanization test

An 18-inch tire vulcanization bladder was produced using the fluoroelastomer composition. Using the obtained tire vulcanization bladder, a tire having a tire size of 265/40R18 was vulcanized for a vulcanization time of 15 minutes without applying a release agent to the surface of the bladder or to the inner surface of the green tire. The number of tire vulcanizations until the tire failure rate reached 5% was evaluated. An index was calculated according to the following formula based on the number of tire vulcanizations in Comparative Example 5 of 100.

Index of number of tire vulcanizations = {(number of vulcanizations of test bladder)/(number of vulcanizations of bladder of Comparative Example 5)} × 100

(6) Dynamic viscoelasticity test

Measurement method of shear modulus G' (1%) at 1% dynamic strain, shear modulus G' (100%) at 100% dynamic strain, and difference δG' (G' (1%) - G' (100%))

Using a rubber process analyzer (type: RPA 2000) manufactured by Alpha Technologies, the shear modulus G' (1%) at 1% dynamic strain, and the shear modulus G' (100%) at 100% dynamic strain were measured at 100°C and 1 Hz. The measured G' (1%) and G' (100%) were then used to calculate the difference δG' (G' (1%) - G' (100%)) between G' (1%) and G' (100%).

In the Examples and the Comparative Examples, the following fluoroelastomer (A), carbon black, peroxide cross-linking agent (C), and other compounding agents were used.

(Fluoroelastomer (A))

The following two types of fluoroelastomer were prepared as the fluoroelastomer (A).

(Fluoroelastomer A1)

In a 3 L stainless steel autoclave, 1.7 L of pure water, 0.17 g of a 50% by mass aqueous solution of $CH_2=CFCF_2OCF(CF_3)CF_2OCF(CF_3)COONH_4$, and 6.8 g of a 50% by mass aqueous solution of $F(CF_2)_5COONH_4$ were placed, and the system was thoroughly purged with nitrogen gas. The temperature was raised to 80°C while stirring at 600 rpm, and then a monomer was placed under pressure so that the initial monomeric composition in the tank was VdF/HFP = 45/55 (molar ratio) and the pressure was 1.52 MPa. Next, a polymerization initiator solution prepared by dissolving 60 mg of ammonium persulfate (APS) in 5 ml of pure water was placed under pressure with nitrogen gas to start the reaction.

When the internal pressure dropped to 1.42 MPa as the polymerization proceeded, additional mixed monomer of VdF/HFP = 77/23 (molar ratio), which was an additional mixed monomer, was placed under pressure until the internal pressure reached 1.52 MPa. At this time, 2.40 g of diiodine compound I $(CF_2)_4$I was placed under pressure. While repeatedly raising and lowering the pressure, an aqueous solution of 60 mg of APS in 5 ml of pure water was placed under pressure with nitrogen gas every 3 hours to continue the polymerization reaction. When 600 g of the mixed monomer had been added, the unreacted monomer was discharged, and the autoclave was cooled to obtain 2351 g of a fluoroelastomer dispersion having a solid content concentration of 26.2% by mass. The polymerization time was 7.5 hours. Analysis of the copolymeric composition of the fluoroelastomer by NMR showed that VdF/HFP was 77/23 (molar ratio), and that the Mooney viscosity ($ML_{1+10}$ (100°C)) was 55. This fluoroelastomer will be referred to as "fluoroelastomer A1."

(Fluoroelastomer A2)

In a 3 L stainless steel autoclave, 1.5 L of pure water, 1.20 g of a 50% by mass aqueous solution of $CH_2=CFCF_2OCF(CF_3)CF_2OCF(CF_3)COONH_4$, and 6.0 g of a 50% aqueous solution of $F(CF_2)_5COONH_4$ were placed, and the system was thoroughly purged with nitrogen gas. The temperature was raised to 80°C while stirring at 600 rpm, and then a monomer was placed under pressure so that the initial monomeric composition in the tank was VdF/2,3,3,3-tetrafluoropropylene = 97/3 (molar ratio) and the pressure was 1.47 MPa. Next, a polymerization initiator solution prepared by dissolving 80 mg of APS in 5 ml of pure water was placed under pressure with nitrogen gas to start the reaction. When the internal pressure dropped to 1.42 MPa as the polymerization proceeded, additional mixed monomer of VdF/2,3,3,3-tetrafluoropropylene = 79/21 (molar ratio), which was an additional mixed monomer, was placed under pressure until the internal pressure reached 1.52 MPa. The pressure was repeatedly raised and lowered, and at the point when 13 g of the additional mixed monomer had been added, 2.10 g of diiodine compound I $(CF_2)_4$I was placed under pressure. While repeatedly raising and lowering the pressure, an aqueous solution of 30 mg of APS in 5 ml of pure water was placed under pressure with nitrogen gas every 3 hours to continue the polymerization reaction. When 530 g of the mixed monomer had been added, the unreacted monomer was discharged, and the autoclave was cooled to obtain 2081 g of a fluoroelastomer dispersion having a solid content concentration of 26.5% by mass. The polymerization time was 10.5 hours. Analysis of the copolymeric composition of the fluoroelastomer by NMR showed that VdF/2,3,3,3-tetrafluoropropylene was 79/21 (molar ratio), and that the Mooney viscosity ($ML_{1+10}$ (100°C)) was 42. This fluoroelastomer will be referred to as "fluoroelastomer A2."

(Carbon black)

The following eight types of carbon black were used as the carbon black.

(B1) Seast G600 (manufactured by Tokai Carbon Co., Ltd., $N_2$SA: 106 $m^2$/g, DBP oil absorption: 75 ml/100 g)
(B2) Seast G300 (manufactured by Tokai Carbon Co., Ltd., $N_2$SA: 84 $m^2$/g, DBP oil absorption: 75 ml/100 g)
(B3) Seast 3 (manufactured by Tokai Carbon Co., Ltd., $N_2$SA: 79 $m^2$/g, DBP oil absorption: 101 ml/100 g)
(B4) Seast 300 (manufactured by Tokai Carbon Co., Ltd., $N_2$SA: 84 $m^2$/g, DBP oil absorption: 75 ml/100 g)
(B5) Seast 600 (manufactured by Tokai Carbon Co., Ltd., $N_2$SA: 106 $m^2$/g, DBP oil absorption: 75 ml/100 g)
(B6) Seast 6 (manufactured by Tokai Carbon Co., Ltd., $N_2$SA: 119 $m^2$/g, DBP oil absorption: 114 ml/100 g)
(B7) Seast 116 (manufactured by Tokai Carbon Co., Ltd., $N_2$SA: 49 $m^2$/g, DBP oil absorption: 133 ml/100 g)
(B8) Denka Black (granule product) (manufactured by Denka Company Limited, $N_2$SA: 69 $m^2$/g, DBP oil absorption: 197 ml/100 g)

The number of foreign particles in each of these carbon blacks B1 to B8 was measured by the method described above. The results are shown in Table 1.

[Table 1]

| | B1 | B2 | B3 | B4 | B5 | B6 | B7 | B8 |
|---|---|---|---|---|---|---|---|---|
| Number of foreign particles (/$mm^2$) | 11 | 16 | 40 | 54 | 59 | 65 | 70 | 9 |

(Peroxide cross-linking agent (C))

2,5-Dimethyl-2,5-di(t-butylperoxy)hexane (PERHEXA 25B-40 or PERHEXA 25B, manufactured by NOF Corporation) was used as the peroxide cross-linking agent (C).

(Acid acceptor)

Hydrotalcite or zinc oxide was used as the acid acceptor.

(Processing aid)

Stearic acid or stearylamine was used as the processing aid.

(Cross-linking accelerator)

Triallyl isocyanurate (TAIC or TAIC M-60, manufactured by Nippon Kasei Chemical Co., Ltd.) was used as the cross-linking accelerator.

(Example 1)

Using a pressure kneader, carbon black, stearic acid, and hydrotalcite were kneaded in the blends shown in Table 3 with 100 parts by mass of the fluoroelastomer (A). The kneaded product was kneaded by an open roll whose temperature was adjusted to 25°C while cooling such that the temperature of the kneaded product was no greater than 100°C, and then discharged. Next, the kneaded product obtained by cooling and kneading was aged at 25°C for 24 hours to obtain a fluoroelastomer pre-compound.

Next, the fluoroelastomer pre-compound, the peroxide cross-linking agent (C), and triallyl isocyanurate were kneaded in the blends shown in Table 3 using an 8-inch open roll to prepare a fluoroelastomer full compound.

The fluoroelastomer full compound was pressed at 170°C for 30 minutes to crosslink, and then oven-crosslinked at 180°C for 4 hours using an electric furnace to produce a crosslinked fluoroelastomer sheet having a thickness of 2 mm.

(Examples 2 to 8 and Comparative Examples 1 to 8)

Crosslinked fluoroelastomer sheets of Examples 2 to 8 and Comparative Examples 1 to 8 were produced in the blends shown in Tables 3 and 4 according to the same procedure as that in Example 1.

The hardness of the crosslinked fluoroelastomer and the number of foreign particles on the fracture surface of each of the produced crosslinked fluoroelastomer sheets of the Examples and the Comparative Examples were measured, and a high temperature tensile fatigue test was conducted, according to the procedures described above. Further, for Examples 2, 5, and 6 and Comparative Example 5, bladders for tire vulcanization were produced and a tire vulcanization test was conducted. The results are shown in Table 2.

[Table 2]

| | Example 2 | Example 5 | Example 6 | Comparative Example 5 |
|---|---|---|---|---|
| Index of number of tire vulcanizations (-) | 940 | 820 | 1250 | 100 |

[Table 3]

| | | Example 1 | Example 2 | Example 3 | Example 4 | Example 5 | Example 6 | Example 7 | Example 8 |
|---|---|---|---|---|---|---|---|---|---|
| Blend | | | | | | | | | |
| Fluoroelastomer A1 | parts by mass | 100 | 100 | 100 | 100 | 100 | | | |
| Fluoroelastomer A2 | parts by mass | | | | | | 100 | 100 | 100 |
| Carbon black B1 | parts by mass | 28 | 31 | 35 | 39 | | 31 | 9 | |
| Carbon black B2 | parts by mass | | | | | 31 | | | |
| Carbon black B3 | parts by mass | | | | | | | | |
| Carbon black B4 | parts by mass | | | | | | | | |
| Carbon black B5 | parts by mass | | | | | | | 22 | |
| Carbon black B6 | parts by mass | | | | | | | | |
| Carbon black B7 | parts by mass | | | | | | | | |
| Carbon black B8 | parts by mass | | | | | | | | 40 |
| Hydrotalcite | parts by mass | 1.2 | 1.2 | 1.2 | 1.2 | 1.2 | 1.2 | 1.2 | 1.2 |
| Stearic acid | parts by mass | 0.4 | 0.4 | 0.4 | 0.4 | 0.4 | 0.4 | 0.4 | 0.4 |
| Zinc oxide | parts by mass | | | | | | | | |
| Stearylamine | parts by mass | | | | | | | | |
| TAIC | parts by mass | 0.6 | 0.6 | 0.6 | 0.6 | 0.6 | 1.5 | 1.5 | 0.6 |
| PERHEXA25B | parts by mass | 1.2 | 1.2 | 1.2 | 1.2 | 1.2 | 1.5 | 1.5 | 0.6 |
| TAIC M60 | parts by mass | | | | | | | | |
| PERHEXA25B40 | parts by mass | | | | | | | | |
| Dynamic viscoelasticity test | | | | | | | | | |
| Difference δG' | \| kPa | 1734 | 1840 | 2062 | 2559 | 1469 | 1269 | 1298 | 2376 |
| Crosslinking conditions | | | | | | | | | |
| Press crosslinking | | 170°C × 30 min | | | | | | | |
| Oven crosslinking | | 180°C × 4 hr | | | | | | | |
| Hardness (25°C) | | | | | | | | | |
| After 3 sec | - | 79 | 80 | 81 | 83 | 79 | 77 | 77 | 85 |

(continued)

| | | Example 1 | Example 2 | Example 3 | Example 4 | Example 5 | Example 6 | Example 7 | Example 8 |
|---|---|---|---|---|---|---|---|---|---|
| Number of foreign particles confirmed on fracture surface | | | | | | | | | |
| | $/mm^2$ | 4 | 4 | 0 | 4 | 10 | 0 | 20 | 0 |
| Tensile fatigue @ 150°C Number of cycles until 50% fracture | | | | | | | | | |
| | number of cycles | did not fracture to 50% | did not fracture to 50% | did not fracture to 50% | 8765 | did not fracture to 50% | did not fracture to 50% | 8583 | did not fracture to 50% |

[Table 4]

| | | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|
| Blend | | | | | | | | | |
| Fluoroelastomer A1 | parts by mass | 100 | 100 | 100 | 100 | 100 | 100 | | |
| Fluoroelastomer A2 | parts by mass | | | | | | | 100 | 100 |
| Carbon black B1 | parts by mass | | | | | | | | |
| Carbon black B2 | parts by mass | | | | | | | | |
| Carbon black B3 | parts by mass | | | | 31 | | | | |
| Carbon black B4 | parts by mass | | | 31 | | | | | |
| Carbon black B5 | parts by mass | 31 | | | | | | 31 | |
| Carbon black B6 | parts by mass | | 31 | | | 25 | | | 31 |
| Carbon black B7 | parts by mass | | | | | | 31 | | |
| Carbon black B8 | parts by mass | | | | | | | | |
| Hydrotalcite | parts by mass | 1.2 | 1.2 | 1.2 | 1.2 | | 1.2 | 1.2 | 1.2 |
| Stearic acid | parts by mass | 0.4 | 0.4 | 0.4 | 0.4 | | 0.4 | 0.4 | 0.4 |
| Zinc oxide | parts by mass | | | | | 1 | | | |
| Stearylamine | parts by mass | | | | | 1 | | | |

(continued)

| | | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|
| TAIC | parts by mass | 0.6 | 0.6 | 0.6 | 0.6 | | 0.6 | 1.5 | 1.5 |
| PERHEXA25B | parts by mass | 1.2 | 1.2 | 1.2 | 1.2 | | 1.2 | 1.5 | 1.5 |
| TAIC M60 | parts by mass | | | | | 0.83 | | | |
| PERHEXA25B40 | parts by mass | | | | | 1.88 | | | |
| Dynamic viscoelasticity test | | | | | | | | | |
| Difference δG' | kPa | 1751 | 2042 | 1653 | 1372 | 735 | 1162 | 1310 | 1449 |
| Crosslinking conditions | | | | | | | | | |
| Press crosslinking | | 170°C × 30 min | | | | | | | |
| Oven crosslinking | | 180°C × 4 hr | | | | | | | |
| Hardness (25°C) | | | | | | | | | |
| After 3 sec | - | 79 | 79 | 79 | 80 | 77 | 79 | 77 | 80 |
| Number of foreign particles confirmed on fracture surface | | | | | | | | | |
| | /$mm^2$ | 38 | 50 | 50 | 56 | 56 | 71 | 28 | 54 |
| Tensile fatigue @ 150°C<br>Number of cycles until 50% fracture | | | | | | | | | |
| | number of cycles | 5160 | 3775 | 870 | 1450 | 2050 | 1710 | 2860 | 2655 |

From the results of Examples 2 and 5 to 7 and Comparative Examples 1 to 4 and 6 to 8, which have the same amount of carbon black blended, it can be seen that the crosslinked fluoroelastomers of Examples 2 and 5 to 7, which used carbon black having 16/$mm^2$ or less foreign particles, exhibited high tensile fatigue resistance at 150°C, whereas the crosslinked fluoroelastomers of Comparative Examples 1 to 4 and 6 to 8, which used carbon black having 40/$mm^2$ or more foreign particles, exhibited a low tensile fatigue resistance of about 1/2 or less that of the Examples.

In addition, the bladders for tire vulcanization produced using the fluoroelastomer compositions of Examples 2, 5, and 6 had a service life (number of vulcanizations) of about 10 times that of the bladder for tire vulcanization produced using the fluoroelastomer composition of Comparative Example 5.

Industrial Applicability

The fluoroelastomer composition and the crosslinked fluoroelastomer according to the present disclosure have excellent resistance to crack growth at high temperature, and can therefore be used for applications requiring high mechanical properties at high temperature.

This application claims priority based on Japanese Patent Application No. 2018-31230 filed in Japan on February 23, 2018, the entire contents of which are incorporated herein by reference.

Reference Signs List

| | |
|---|---|
| 1 | funnel |
| 2 | filter (membrane filter) |
| 3 | support screen |
| 4 | filter base |
| 5 | filtrate collection container |
| 9 | vacuum filtration device |
| 10 | open roll |
| 11 | first roll |
| 12 | second roll |
| 13 | intermediate composition |
| 14 | sheeted composition |

Embodiments

[Embodiment 1]

A fluoroelastomer composition comprising 10 to 60 parts by mass of a carbon black (B) and 0.1 to 10 parts by mass of a peroxide cross-linking agent (C) per 100 parts by mass of a peroxide-crosslinkable fluoroelastomer (A), wherein the carbon black (B) has a number of foreign particles measured under the following measurement conditions of 30/$mm^2$ or less,

Measurement conditions:

A dispersion is prepared by dispersing the carbon black (B) in ethanol such that a content of the carbon black (B) is 0.1% by mass, 1 ml of the dispersion is collected, the collected dispersion is vacuum-filtered with a filter, a residue of the carbon black (B) captured on a surface of the filter is observed with a scanning electron microscope, and the number of foreign particles having an aspect ratio of 1.1 or less and a Heywood diameter of 5 μm or more is measured.

[Embodiment 2]

The fluoroelastomer composition according to embodiment 1, wherein the carbon black (B) has a nitrogen adsorption specific surface area ($N_2SA$) of 25 $m^2/g$ or more and 180 $m^2/g$ or less, and a dibutyl phthalate (DBP) oil absorption of 40 ml/100 g or more and 250 ml/100 g or less.

[Embodiment 3]

The fluoroelastomer composition according to embodiment 1 or 2, wherein the fluoroelastomer (A) is a vinylidene

fluoride fluoroelastomer, a tetrafluoroethylene/propylene fluoroelastomer, or a tetrafluoroethylene/perfluoroalkyl vinyl ether fluoroelastomer.

[Embodiment 4]

The fluoroelastomer composition according to any one of embodiments 1 to 3, wherein in a dynamic viscoelasticity test (measurement frequency: 1 Hz, measurement temperature: 100°C) using a rubber process analyzer (RPA), a difference δG' (G' (1%) - G' (100%)) between a shear modulus G' (1%) at 1% dynamic strain and a shear modulus G' (100%) at 100% dynamic strain at the time of non-crosslinking is 300 kPa or more and 5000 kPa or less.

[Embodiment 5]

A crosslinked fluoroelastomer obtained by crosslinking a fluoroelastomer composition according to any one of embodiments 1 to 4.

[Embodiment 6]

A crosslinked fluoroelastomer obtained by peroxide-crosslinking a fluoroelastomer composition comprising a peroxide-crosslinkable fluoroelastomer (A), a carbon black (B), and a peroxide cross-linking agent (C), wherein

the crosslinked fluoroelastomer has a hardness at 25°C of 60 to 90, and
a number of foreign particles having an aspect ratio of 1.1 or less and a Heywood diameter of 5 μm or more present on a fracture surface obtained by tensile fracture of the crosslinked fluoroelastomer at 170°C is 25/$mm^2$ or less.

[Embodiment 7]

The crosslinked fluoroelastomer according to embodiment 6, which is used for a bladder for tire manufacturing.

## Claims

1. A fluoroelastomer composition comprising 10 to 60 parts by mass of a carbon black (B) and 0.1 to 10 parts by mass of a peroxide cross-linking agent (C) per 100 parts by mass of a peroxide-crosslinkable fluoroelastomer (A), wherein

the fluoroelastomer (A) is a VdF/2,3,3,3-tetrafluoropropylene copolymer,
the carbon black (B) has a number of foreign particles measured under the following measurement conditions of 30/$mm^2$ or less,
wherein in a dynamic viscoelasticity test, measured under a measurement frequency of 1 Hz and a measurement temperature of 100°C using a rubber process analyzer (RPA), a difference δG' (G' (1%) - G' (100%)) between a shear modulus G' (1%) at 1% dynamic strain and a shear modulus G' (100%) at 100% dynamic strain at the time of non-crosslinking is 400 kPa or more and 4000 kPa or less,
Measurement conditions:
A dispersion is prepared by dispersing the carbon black (B) in ethanol such that a content of the carbon black (B) is 0.1% by mass and applying ultrasonic waves for 2 hours with an ultrasonic wave machine having an oscillation frequency of 35000 Hz, 1 ml of the dispersion is collected, the collected dispersion is vacuum-filtered with a filter having a pore size of 0.1 μm or more and 3 μm or less, a residue of the carbon black (B) captured on a surface of the filter is observed with a scanning electron microscope, nine arbitrary locations on the filtration surface are photographed at an observation magnification of 500, and the number of foreign particles having an aspect ratio of 1.1 or less and a Heywood diameter of 5 μm or more in each image is measured.

2. The fluoroelastomer composition according to claim 1, wherein the carbon black (B) has a nitrogen adsorption specific surface area ($N_2SA$) of 25 $m^2/g$ or more and 180 $m^2/g$ or less, and a dibutyl phthalate (DBP) oil absorption of 40 ml/100 g or more and 250 ml/100 g or less.

3. The fluoroelastomer composition according to claim 1 or claim 2, wherein the carbon black (B) has the number of foreign particles of 15/$mm^2$ or less.

4. The fluoroelastomer composition according to any of claims 1 to 3, wherein an amount of the carbon black (B) is 20 to

50 parts by mass per 100 parts by mass of a peroxide-crosslinkable fluoroelastomer (A).

**5.** A crosslinked fluoroelastomer obtained by crosslinking the fluoroelastomer composition according to any of claims 1 to 4.

[Fig. 1]

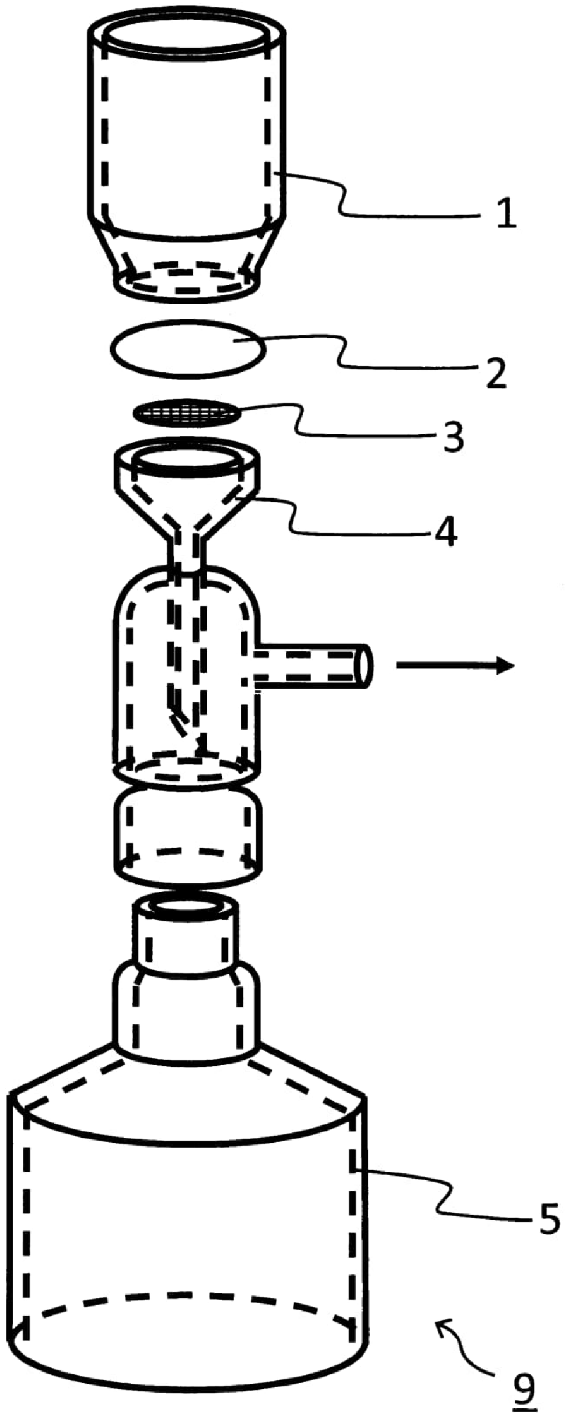

[Fig. 2]

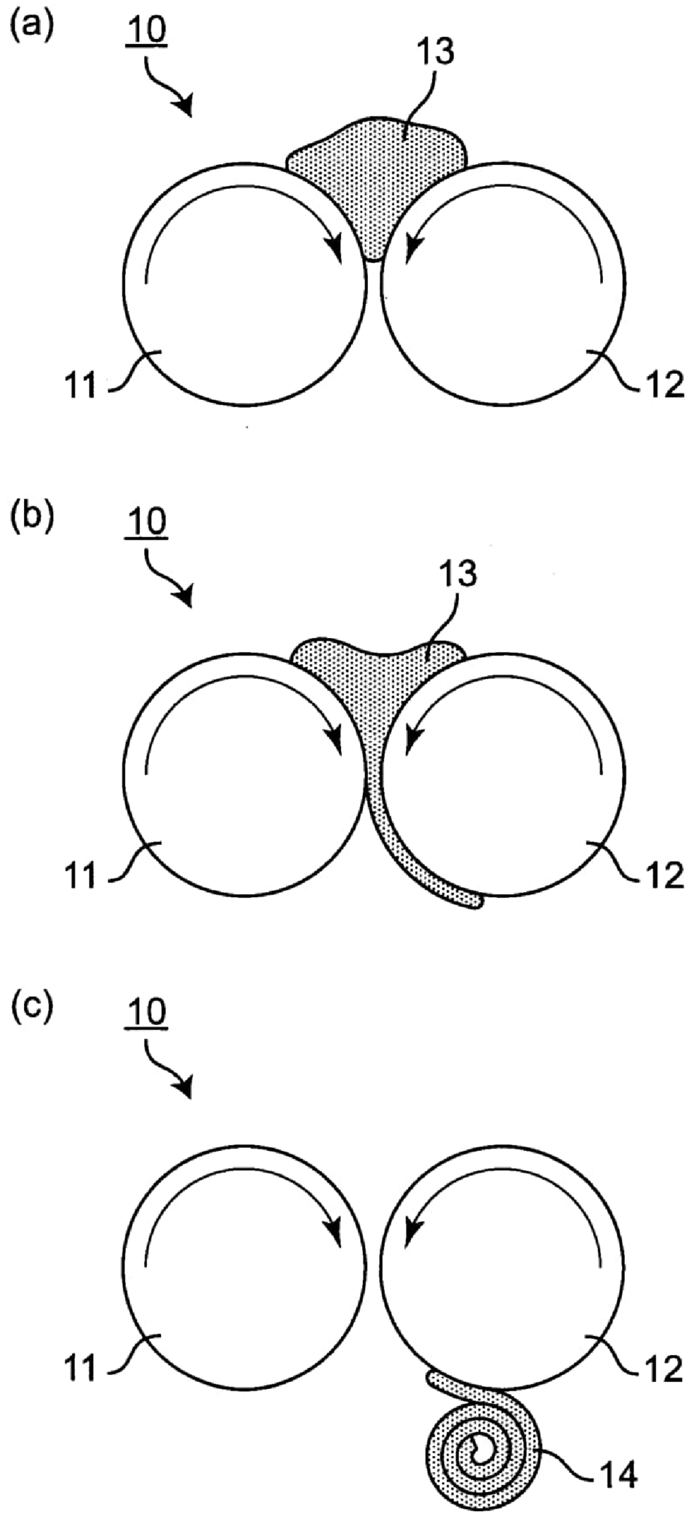

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2012026006 A
- WO 2013125735 A
- JP 2018031230 A


### Non-patent literature cited in the description


- Carbon Black Handbook. 1995